# EUROPEAN PATENT SPECIFICATION

(11) **EP 3 415 452 B1**
(45) Date of publication and mention of the grant of the patent: **26.08.2020**
(21) Application number: 18175983.8
(22) Date of filing: 05.06.2018
(51) Int. Cl.: B65H 54/26, B65H 54/88, B65H 57/00, B25J 11/00

(54) **AUTOMATIC YARN THREADING DEVICE, YARN PROCESSING SYSTEM, AND YARN THREADING METHOD**
AUTOMATISCHE GARNEINFÄDELVORRICHTUNG, GARNVERARBEITUNGSSYSTEM UND GARNEINFÄDELVERFAHREN
DISPOSITIF D'ENFILAGE DE FIL AUTOMATIQUE, SYSTÈME DE TRAITEMENT DE FILS ET PROCÉDÉ D'ENGAGEMENT DE FIL

(30) Priority: 15.06.2017 JP 2017118040
(43) Date of publication of application: 19.12.2018
(73) Proprietor: TMT Machinery, Inc., Osaka-shi, Osaka 541-0041 (JP)
(72) Inventor: Kato, Noriko, Kyoto, 612-8686 (JP); Yamamoto, Kyohei, Kyoto, 612-8686 (JP); Konno, Taisuke, Kyoto, 612-8686 (JP); Yanagisawa, Makoto, Kyoto, 612-8686 (JP)
(74) Representative: Hoffmann Eitle

(56) References cited:
- EP-A2- 1 530 107
- JP-A- H0 569 355
- JP-A- 2017 082 381

## Description

### BACKGROUND OF THE INVENTION

The present invention relates to an automatic yarn threading device for threading yarns onto a yarn processing apparatus, a yarn processing system including the yarn processing apparatus and the automatic yarn threading device, and a yarn threading method of performing yarn threading onto the yarn processing apparatus by using the automatic yarn threading device.

In a spun yarn take-up machine recited in JP 2015-78455 A, yarns spun out from a spinning apparatus are wound onto a first godet roller and a second godet roller. The yarns are then threaded onto fulcrum guides, respectively. Each yarn is then traversed by a traverse guide about the fulcrum guide, and is wound onto a bobbin attached to a bobbin holder. According to JP 2015-78455 A, furthermore, to thread yarns spun out from the spinning apparatus onto the spun yarn take-up machine, to begin with, the second godet roller is moved to a position close to the first godet roller and the fulcrum guides are arranged to be close to each other. Subsequently, while being retained by a suction gun, the yarns spun out from the spinning apparatus are wound onto the first godet roller and the second godet roller in this order. Then the yarns are threaded onto the respective fulcrum guides.

### SUMMARY OF THE INVENTION

While in JP 2015-78455 A the yarns retained by the suction gun are manually threaded by an operator, yarn threading may be automatically performed by a yarn threading robot having a robotic arm with a suction gun or the like, for achieving automation of the system. When yarn threading is performed by a yarn threading robot, for example, an operator teaches a robotic arm a yarn threading operation in advance (teaching), and the robotic arm is controlled to reproduce the taught operation at the time of yarn threading (playback) (so-called teaching-playback).

In the spun yarn take-up machine recited in JP 2015-78455 A, replacement and maintenance of a spun yarn take-up unit including first and second godet rollers and a winding unit including fulcrum guides are frequently carried out. In doing so, the positions of the first and second godet rollers and the fulcrum guides may be deviated. On this account, after the replacement or maintenance of the spun yarn take-up unit or the winding unit, it is necessary to adjust the operation taught to the robotic arm in accordance with the positional deviation. However, because teaching typically requires a lot of time, an enormous time is required until the spun yarn take-up apparatus becomes ready after the replacement or maintenance of the spun yarn take-up unit or the winding unit, if teaching is performed each time replacement or maintenance of the spun yarn take-up unit or the winding unit is carried out.

In a yarn production system, plural spun yarn take-up apparatuses described in JP 2015-78455 A are provided in one line. In such a case, one yarn threading robot according to the preamble of claim 1 as described in JP 2017-82381 A may be provided for these spun yarn take-up apparatuses, and yarn threading onto the plural spun yarn take-up apparatuses may be carried out by the one yarn threading robot. In this case, because of positional deviations of the first and second godet rollers and the fulcrum guides between the spun yarn take-up apparatuses, the operation of the robotic arm for yarn threading must be differentiated between the spun yarn take-up apparatuses. If teaching is carried out for each of the spun yarn take-up apparatuses in this case, it takes a significant time to complete the teaching for every spun yarn take-up apparatus.

In regard to the above, there is a known technology in which a camera is mounted on a robotic arm or the like, a positional deviation amount is calculated based on images taken by the camera while when a taught operation is reproduced, and the operation is corrected based on the calculation result (see, e.g., Japanese Unexamined Patent Publication No. H5-241626 and Japanese Unexamined Patent Publication No. H7-266268). By using this technology, for example, a taught yarn threading operation may be corrected based on images taken by a camera while the taught yarn threading operation is reproduced. This arrangement, however, requires complicated processes such as image processing for the images taken by the camera, when the taught yarn threading operation is corrected.

An object of the present invention is to provide an automatic yarn threading device, a yarn processing system, and an automatic yarn threading method, which make it possible to properly perform yarn threading in accordance with the position of a yarn processing apparatus. The invention is defined in claims 1 and 15. The further claims describe preferred embodiments.

According to the first aspect, an automatic yarn threading device configured to perform yarn threading onto a yarn processing apparatus includes: a yarn threading arm; a storage unit which is configured to store arm movement information regarding how the yarn threading arm is moved when the yarn threading arm is caused to perform the yarn threading onto the yarn processing apparatus at a predetermined reference position and information of an actual position of the yarn processing apparatus; and a controller, when the yarn threading arm is caused to perform the yarn threading onto the yarn processing apparatus, the controller moving the yarn threading arm based on the arm movement information which is corrected based on a difference between the actual position of the yarn processing apparatus and the reference position.

According to this aspect, because the yarn threading arm is moved and caused to perform yarn threading onto the yarn processing apparatus based on the arm movement information corrected based on the difference between the actual position of the yarn processing apparatus and the reference position, the yarn threading arm properly performs the yarn threading onto the yarn processing apparatus in accordance with the position of the yarn processing apparatus. In the present aspect, furthermore, while the arm movement information is stored in the storage unit by teaching or the like, information of the actual position of the yarn processing apparatus is relatively easily acquired and stored in the storage unit by using a position detector such as a sensor which is able to directly detect the position of the yarn processing apparatus. Furthermore, the process of correcting the arm movement information based on the positional difference is relatively easy as compared to the above-described image processing or the like.

According to the second aspect, the automatic yarn threading device of the first aspect is configured to perform the yarn threading onto plural yarn processing apparatuses each of which is identical with the yarn processing apparatus, wherein, the storage unit is configured to store the arm movement information regarding how the yarn threading arm is moved when the yarn threading arm is caused to perform the yarn threading onto a first yarn processing apparatus among the yarn processing apparatuses and information of an actual position of each of the yarn processing apparatuses, and when the yarn threading arm is caused to perform the yarn threading onto a second yarn processing apparatus which is different from the first yarn processing apparatus among the yarn processing apparatuses, the controller moving the yarn threading arm based on the arm movement information which is corrected based on a difference between the position of the first yarn processing apparatus and the position of the second yarn processing apparatus.

According to this aspect, because the yarn threading arm is moved and caused to perform yarn threading onto the second yarn processing apparatus based on the arm movement information corrected based on the difference between the position of the second yarn processing apparatus and the position of the first processing apparatus, the yarn threading arm properly performs the yarn threading onto each yarn processing apparatus in accordance with the position of each yarn processing apparatus. In the present aspect, furthermore, while the arm movement information is stored in the storage unit by teaching or the like, information of the actual position of each yarn processing apparatus is relatively easily acquired and stored in the storage unit by using the above-described position detector. Furthermore, the process of correcting the arm movement information based on the positional difference is relatively easy as compared to the above-described image processing or the like.

According to the third aspect, the automatic yarn threading device of the second aspect is arranged such that the yarn processing apparatuses are lined up in a predetermined arrangement direction, a main body movable in the arrangement direction is provided, the yarn threading arm being attached to the main body, the controller selectively moves the main body to one of yarn threading positions corresponding to the respective yarn processing apparatuses, and as information of the position of each of the yarn processing apparatuses, the storage unit stores information of the position of each of the yarn processing apparatuses with reference to a corresponding one of the corresponding yarn threading positions.

Because the positional information of each yarn processing apparatus stored in the storage unit is the positional information with reference to the yarn threading position corresponding to that yarn processing apparatus, the difference between the position of the first yarn processing apparatus and the position of the second yarn processing apparatus can be used as a correction amount of the arm movement information, when the yarn threading onto the second yarn processing apparatus is performed. In this way, the arm movement information is correctable with a simple process.

According to the fourth aspect, the automatic yarn threading device of any one of the first to third aspects further includes a sensor configured to detect positions of the yarn processing apparatuses, the controller causing the sensor to detect the positions of the yarn processing apparatuses and storing information of the positions of the yarn processing apparatuses in the storage unit based on a detection result of the sensor.

According to this aspect, the positional information of the yarn processing apparatus is stored in the storage unit in accordance with a detection result of the sensor on the automatic yarn threading device.

According to the fifth aspect, the automatic yarn threading device of the fourth aspect is arranged such that the sensor is attached to the yarn threading arm.

According to this aspect, because the sensor is provided on the yarn threading arm, the position of a desired part of the yarn processing apparatus is detectable by the sensor as the yarn threading arm is moved. This makes it possible to increase the degree of freedom in the selection of a part of the yarn processing apparatus detected by the sensor.

According to the sixth aspect, the automatic yarn threading device of the fourth or fifth aspect is arranged such that, when one of the yarn processing apparatuses is replaced, the controller causes the sensor to detect the position of the one of the yarn processing apparatuses, and updates the information of the position of the one of the yarn processing apparatuses stored in the storage unit, based on a detection result of the sensor.

When a yarn processing apparatus is replaced, the position of the yarn processing apparatus may be deviated. According to the present aspect, when one of the yarn processing apparatuses is replaced, the information of the position of the one of the yarn processing apparatuses stored is updated. On this account, when yarn threading is performed onto the replaced yarn processing apparatus, the arm movement information is corrected based on the updated positional information, and hence the yarn threading arm is able to properly perform the yarn threading onto the replaced yarn processing apparatus.

According to the seventh aspect, the automatic yarn threading device of any one of the fourth to sixth aspect is arranged such that, when one of the yarn processing apparatuses is maintained, the controller causes the sensor to detect the position of the one of the yarn processing apparatuses, and updates the information of the position of the one of the yarn processing apparatuses stored in the storage unit, based on a detection result of the sensor.

When a yarn processing apparatus is maintained, the position of the yarn processing apparatus may be deviated. According to the present aspect, when one of the yarn processing apparatuses is maintained, the information of the position of the one of the yarn processing apparatuses stored is updated. On this account, when yarn threading is performed onto the maintained yarn processing apparatus, the arm movement information is corrected based on the updated positional information, and hence the yarn threading arm is able to properly perform the yarn threading onto the maintained yarn processing apparatus.

According to the eighth aspect, the automatic yarn threading device of any one of the first to seventh aspects is arranged such that, each of the yarn processing apparatuses is a spun yarn take-up apparatus including a take-up unit configured to take up spun yarns and a winding unit configured to wind the taken-up yarns, and as the information of the position of each of the yarn processing apparatus, the storage unit stores information of a position of the take-up unit and information of a position of the winding unit.

When the yarn processing apparatus is the spun yarn take-up apparatus including the take-up unit and the winding unit, the way of positional deviation may be different between the take-up unit and the winding unit. Because in the present aspect the positional information of the take-up unit and the positional information of the winding unit are stored, the arm movement information is properly correctable.

According to the ninth aspect, the automatic yarn threading device of the eighth aspect is arranged such that the take-up unit includes a godet roller, and the information of the position of the take-up unit includes information of a position of a part of the take-up unit in the vicinity of the godet roller.

According to this aspect, because the arm movement information is corrected based on a part of the take-up unit in the vicinity of the godet roller and the yarn threading arm is moved based on the corrected arm movement information, it is possible to cause the yarn threading arm to properly perform yarn threading onto the godet roller.

According to the tenth aspect, the automatic yarn threading device of the ninth aspect is arranged such that the information of the position of to take-up unit includes information of a position of a leading end surface of the godet roller in an axial direction of the godet roller.

The leading end surface of the godet roller is typically a plane. On this account, even if a detection position is slightly deviated when the position of the leading end surface of the godet roller in the axial direction of the godet roller is acquired to be stored in the storage unit, it is possible to acquire information of the accurate position in the axial direction of the godet roller.

According to the eleventh aspect, the automatic yarn threading device of the ninth or tenth aspect is arranged such that the take-up unit includes an alignment guide which is provided upstream of the godet roller in a yarn path and arranges the yarns to be lined up in the axial direction of the godet roller, and the information of the position of the take-up unit includes information of a position of a part of the take-up unit in the vicinity of the alignment guide.

Because the arm movement information is corrected based on a part of the take-up unit in the vicinity of the alignment guide and the yarn threading arm is moved based on the corrected arm movement information, it is possible to cause the yarn threading arm to properly perform yarn threading onto the alignment guide.

According to the twelfth aspect, the automatic yarn threading device of any one of the eighth to eleventh aspects is arranged such that the winding unit includes distribution guides which are lined up in a direction orthogonal to the axial direction of the godet roller, and the information of the position of the winding unit includes information of a position of a part of the winding unit in the vicinity of the distribution guides.

According to this aspect, because the arm movement information is corrected based on a part of the winding unit in the vicinity of the distribution guides and the yarn threading arm is moved based on the corrected arm movement information, it is possible to cause the yarn threading arm to properly perform yarn threading onto the distribution guides.

According to the thirteenth aspect, the automatic yarn threading device of any one of the first to twelfth aspects is arranged such that each of the yarn processing apparatuses includes a plane, and the information of the positions stored in the storage unit includes information of a position of the plane in a direction orthogonal to the plane.

According to this aspect, the position of a plane of the yarn processing apparatus in the direction orthogonal to the plane is stored. With this arrangement, even if a detection position is slightly deviated when information of the position is acquired to be stored in the storage unit, it is possible to properly acquire the positional information of the yarn processing apparatus.

According to the fourteenth aspect, the automatic yarn threading device of any one of the first to thirteenth aspects is arranged such that each of the yarn processing apparatuses is positioned by a positioning member and installed, and the storage unit stores at least one set of information of the position of each of the yarn processing apparatuses for each of three directions which are orthogonal to one another.

Because the yarn processing apparatus is positioned by the positioning member and installed, the installed yarn processing apparatus is not significantly deviated in the rotational direction. The position of the yarn processing apparatus is accurately acquired when at least one position of the yarn processing apparatus is stored for each of the three directions orthogonal to one another.

According to the fifteenth aspect, a yarn processing system includes: a yarn processing apparatus; and an automatic yarn threading device configured to perform yarn threading onto the yarn processing apparatus, the automatic yarn threading device including: a yarn threading arm; a storage unit which is configured to store arm movement information regarding how the yarn threading arm is moved when the yarn threading arm is caused to perform the yarn threading onto the yarn processing apparatus at a predetermined reference position and information of an actual position of the yarn processing apparatus; and a controller, when the yarn threading arm is caused to perform the yarn threading onto the yarn processing apparatus, the controller moving the yarn threading arm based on the arm movement information which is corrected based on a difference between the actual position of the yarn processing apparatus and the reference position.

According to this aspect, because the yarn threading arm is moved and caused to perform yarn threading onto the yarn processing apparatus based on the arm movement information corrected based on the difference between the actual position of the yarn processing apparatus and the reference position, the yarn threading arm properly performs the yarn threading onto the yarn processing apparatus in accordance with the position of the yarn processing apparatus. In the present aspect, furthermore, while the arm movement information is stored in the storage unit by teaching or the like, information of the actual position of the yarn processing apparatus is relatively easily acquired and stored in the storage unit by using a position detector such as a sensor which is able to directly detect the position of the yarn processing apparatus. Furthermore, the process of correcting the arm movement information based on the positional difference is relatively easy as compared to the above-described image processing or the like.

According to the sixteenth aspect, the yarn processing system of the fifteenth aspect further includes plural yarn processing apparatuses each of which is identical with the yarn processing apparatus, the storage unit being configured to store the arm movement information regarding how the yarn threading arm is moved when the yarn threading arm is caused to perform the yarn threading onto a first yarn processing apparatus among the yarn processing apparatuses and information of an actual position of each of the yarn processing apparatuses, and when the yarn threading arm is caused to perform the yarn threading onto a second yarn processing apparatus which is different from the first yarn processing apparatus among the yarn processing apparatuses, the controller moving the yarn threading arm based on the arm movement information which is corrected based on a difference between the position of the first yarn processing apparatus and the position of the second yarn processing apparatus.

According to this aspect, because the yarn threading arm is moved and caused to perform yarn threading onto the second yarn processing apparatus based on the arm movement information corrected based on the difference between the position of the second yarn processing apparatus and the position of the first processing apparatus, the yarn threading arm properly performs the yarn threading onto each yarn processing apparatus in accordance with the position of each yarn processing apparatus. In the present aspect, furthermore, while the arm movement information is stored in the storage unit by teaching or the like, information of the actual position of each yarn processing apparatus is relatively easily acquired and stored in the storage unit by using the above-described position detector. Furthermore, the process of correcting the arm movement information based on the positional difference is relatively easy as compared to the above-described image processing or the like.

A yarn threading method according to the seventeenth aspect is a yarn threading method of performing yarn threading onto a yarn processing apparatus by using an automatic yarn threading device, the automatic yarn threading device including: a yarn threading arm; and a storage unit, the method including the steps of: storing, in the storage unit, arm movement information regarding how the yarn threading arm is moved when the yarn threading arm is caused to perform the yarn threading onto the yarn processing apparatus at a predetermined reference position; storing, in the storage unit, information of an actual position of the yarn processing apparatus; and when the yarn threading arm is caused to perform the yarn threading onto the yarn processing apparatus, moving the yarn threading arm based on the arm movement information which is corrected based on a difference between the actual position of the yarn processing apparatus and the reference position.

According to this aspect, because the yarn threading arm is moved and caused to perform yarn threading onto the yarn processing apparatus based on the arm movement information corrected based on the difference between the actual position of the yarn processing apparatus and the reference position, the yarn threading arm properly performs the yarn threading onto the yarn processing apparatus in accordance with the position of the yarn processing apparatus. In the present aspect, furthermore, while the arm movement information is stored in the storage unit by teaching or the like, information of the actual position of the yarn processing apparatus is relatively easily acquired and stored in the storage unit by using a position detector such as a sensor which is able to directly detect the position of the yarn processing apparatus. Furthermore, the process of correcting the arm movement information based on the positional difference is relatively easy as compared to the above-described image processing or the like.

According to the eighteenth aspect, the yarn threading method of the seventeenth aspect is a yarn threading method for performing the yarn threading onto plural yarn processing apparatuses each of which is identical with the yarn threading apparatus by using the automatic yarn threading device, further comprising the steps of: storing, in the storage unit, the arm movement information regarding how the yarn threading arm is moved when the yarn threading arm is caused to perform the yarn threading onto a first yarn processing apparatus among the yarn processing apparatuses; storing, in the storage unit, information of an actual position of each of the yarn processing apparatuses; and when the yarn threading arm is caused to perform the yarn threading onto a second yarn processing apparatus which is different from the first yarn processing apparatus among the yarn processing apparatuses, moving the yarn threading arm based on the arm movement information which is corrected based on a difference between the position of the first yarn processing apparatus and the position of the second yarn processing apparatus.

According to this aspect, because the yarn threading arm is moved and caused to perform yarn threading onto the second yarn processing apparatus based on the arm movement information corrected based on the difference between the position of the second yarn processing apparatus and the position of the first yarn processing apparatus, the yarn threading arm properly performs the yarn threading onto each yarn processing apparatus in accordance with the position of each yarn processing apparatus. In the present aspect, furthermore, while the arm movement information is stored in the storage unit by teaching or the like, information of the actual position of each yarn processing apparatus is relatively easily acquired and stored in the storage unit by using the above-described position detector. Furthermore, the process of correcting the arm movement information based on the positional difference is relatively easy as compared to the above-described image processing or the like.

According to the nineteenth aspect the yarn threading method of the seventeenth or eighteenth aspect is arranged such that the automatic yarn threading device further includes a sensor configured to detect positions of the yarn processing apparatuses, the method further comprising the steps of: causing the sensor to detect the positions of the yarn processing apparatuses; and causing the storage unit to store information of the actual positions of the yarn processing apparatuses based on a detection result of the sensor.

According to this aspect, the positional information of the yarn processing apparatus is stored in the storage unit in accordance with a detection result of the sensor on the automatic yarn threading device.

According to the 20th aspect, the yarn threading method of any one of the seventeenth to nineteenth aspects further includes the step of, when one of the yarn processing apparatuses is replaced, updating the information of the position of the one of the yarn processing apparatuses stored in the storage unit.

When a yarn processing apparatus is replaced, the position of the yarn processing apparatus may be deviated. According to the present aspect, when one of the yarn processing apparatuses is replaced, the information of the position of the one of the yarn processing apparatuses stored is updated. On this account, when yarn threading is performed onto the replaced yarn processing apparatus, the arm movement information is corrected based on the updated positional information, and hence the yarn threading arm is able to properly perform the yarn threading onto the replaced yarn processing apparatus.

According to the 21st aspect, the yarn threading method of any one of the seventeenth to nineteenth aspects further includes the step of, when one of the yarn processing apparatuses is maintained, updating the information of the position of the one of the yarn processing apparatuses stored in the storage unit.

When a yarn processing apparatus is maintained, the position of the yarn processing apparatus may be deviated. According to the present aspect, when one of the yarn processing apparatuses is maintained, the information of the position of the one of the yarn processing apparatuses stored is updated. On this account, when yarn threading is performed onto the maintained yarn processing apparatus, the arm movement information is corrected based on the updated positional information, and hence the yarn threading arm is able to properly perform the yarn threading onto the maintained yarn processing apparatus.

According to the present invention, with a simple process, it is possible to cause a yarn threading arm to properly perform yarn threading onto a yarn processing apparatus in accordance with the position of the yarn processing apparatus.

### BRIEF DESCRIPTION OF THE DRAWINGS

FIG. 1 is a schematic diagram of a spun yarn take-up system of an embodiment of the present invention.
FIG. 2 shows FIG. 1 in the direction of the arrow II.
FIGs. 3(a) and 3(b) show fulcrum guides and their surroundings from above. FIG. 3(a) shows a state when winding is carried out whereas FIG. 3(b) shows a state when yarn threading is carried out.
FIG. 4 is a block diagram showing an electric structure of the spun yarn take-up system.

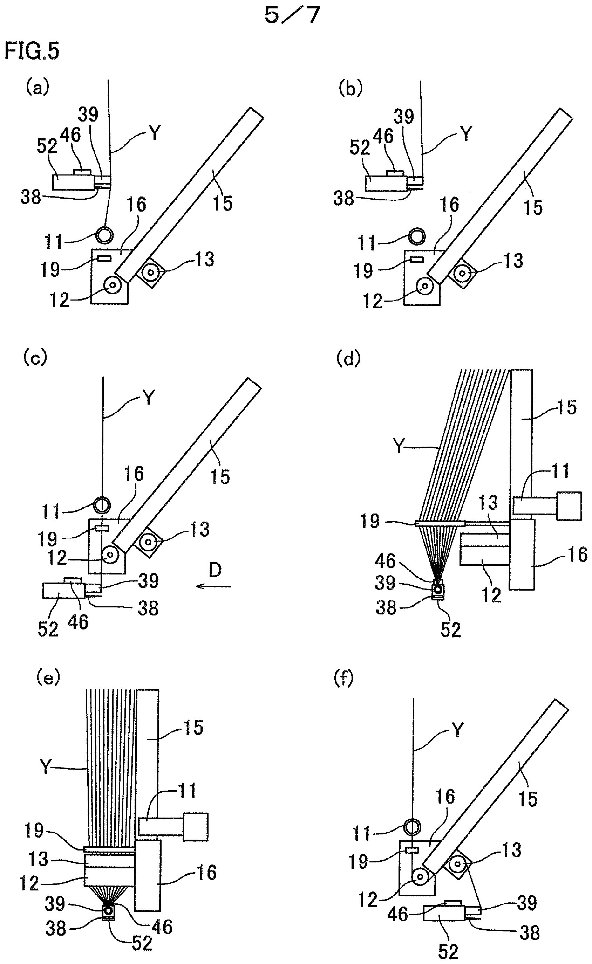

FIG. 5(a) shows a state in which an aspirator of a yarn threading unit is in contact with yarns. FIG. 5(b) shows a state in which handover of the yarns to the aspirator of the yarn threading unit has been completed. FIG. 5(c) shows a state in which the yarn threading unit is moved to a position below a first godet roller. FIG. 5(d) shows FIG. 5(c) in the direction indicated by the arrow D. FIG. 5(e) shows a state in which the yarn threading unit and a regulatory guide are moved so that the yarns are overlapped with the first godet roller. FIG. 5(f) shows a state in which the yarn placement onto the first godet roller and the second godet roller has been completed.
FIG. 6 illustrates how yarn threading onto the fulcrum guides is carried out.
FIG. 7(a) is a flowchart of steps such as setting performed in advance before the activation of the spun yarn take-up system. FIG. 7(b) is a flowchart of a process when a yarn threading robot performs yarn threading onto a take-up unit. FIG. 7(c) is a flowchart of a process carried out when the take-up unit is replaced or maintained.

### DESCRIPTION OF THE PREFERRED EMBODIMENTS

The following will describe a preferred embodiment of the present invention.

### (Overall Structure of Spun Yarn Take-up System)

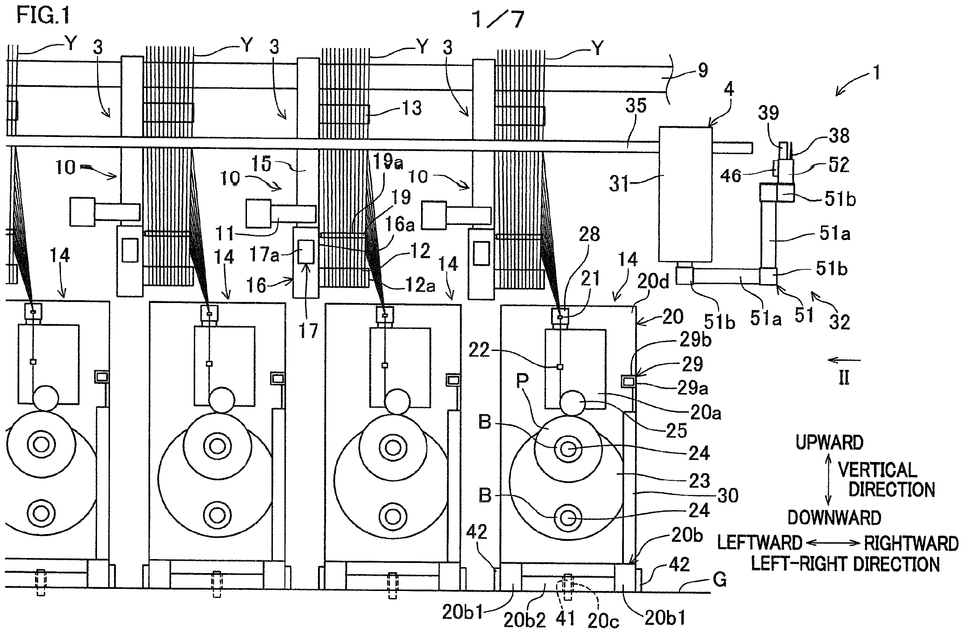

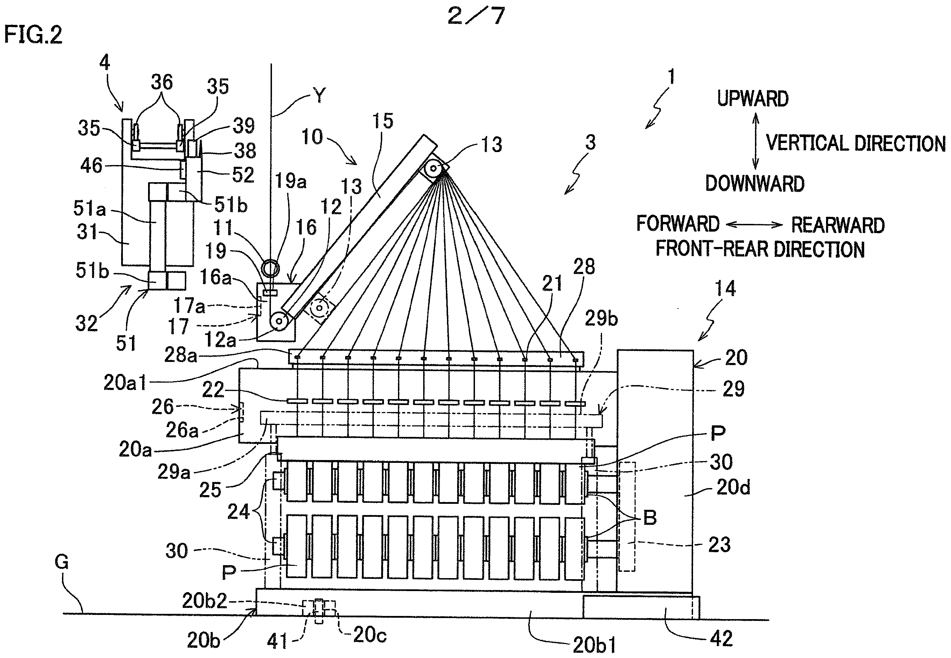

A spun yarn take-up system 1 of the present embodiment (yarn processing system of the present invention) is configured to take up yarns Y spun out from an unillustrated spinning apparatus and form packages P by winding the yarns Y onto bobbins B, respectively. As shown in FIG. 1 and FIG. 2, the spun yarn take-up system 1 includes plural take-up units 3 (spun yarn take-up apparatus and yarn processing apparatus of the present invention) and a single yarn threading robot 4 (automatic yarn threading device of the present invention) provided for the take-up units 3 in a shared manner.

### (Take-Up Units)

The take-up units 3 are provided to be lined up in one horizontal direction. Hereinafter, the direction in which the take-up units 3 are lined up will be referred to as a left-right direction (arrangement direction in the present invention), the direction which is horizontal and orthogonal to the left-right direction will be referred to as a front-rear direction, and the direction in which the gravity acts will be referred to as a vertical direction. Furthermore, hereinafter, the right side and the left side in the left-right direction as shown in FIG. 1 and the front side and the back side in the front-rear direction as shown in FIG. 2 are defined and used for explanations. Each take-up unit 3 includes a take-up member 10 and a winding unit 14.

### (Take-Up Member)

The take-up member 10 includes an aspirator 11, a first godet roller 12, a yarn regulating guide 19, and a second godet roller 13.

The aspirator 11 extends along the left-right direction. The aspirator 11 is provided to suck and retain yarns Y spun out from the spinning apparatus in advance, before yarn threading onto the take-up member 10 and the winding unit 14.

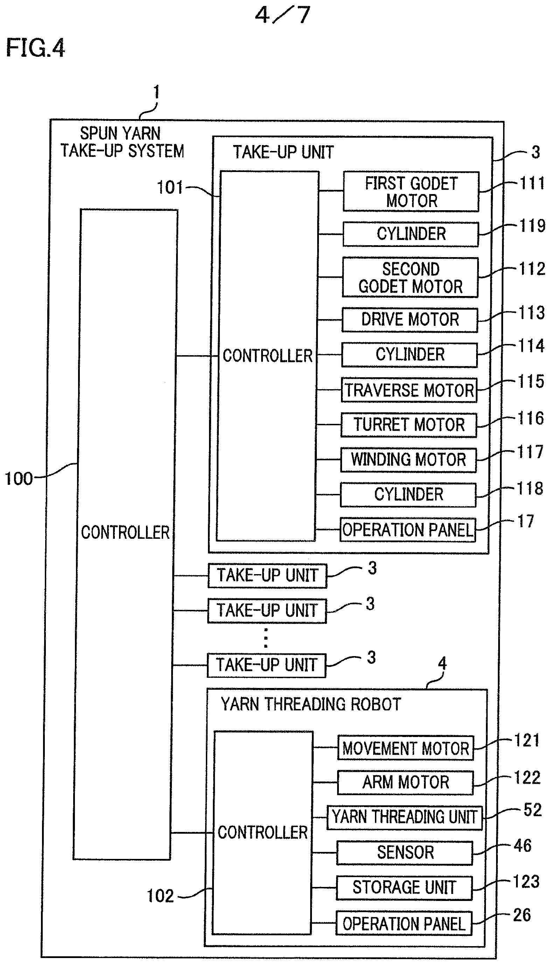

The first godet roller 12 is provided below the aspirator 11 in the vertical direction and extends rightward from a right end face 16a of a frame 16 of the take-up member 10 to be substantially parallel to the left-right direction. The first godet roller 12 is rotationally driven by a first godet motor 111 (see FIG. 4). A leading end surface (right end face) 12a of the first godet roller 12 and the right end face 16a of the frame 16 are both planes orthogonal to the left-right direction.

The yarn regulating guide 19 (alignment guide of the present invention) is provided between the aspirator 11 and the first godet roller 12 in the vertical direction and extends rightward from the right end face 16a of the frame 16. The yarn regulating guide 19 is, for example, a known yarn guide with a comb teeth shape. When the yarns Y are threaded thereon, the yarn regulating guide 19 regulates the movement of the yarns Y so that the interval between neighboring yarns Y is adjusted to be a predetermined interval (e.g., 4mm). A top surface 19a of the yarn regulating guide 19 is a plane orthogonal to the up-down direction. The yarn regulating guide 19 is arranged to be movable in the left-right direction by a cylinder 119 (see FIG. 4). With this, in the left-right direction, the yarn regulating guide 19 is movable between a withdrawn position where the guide falls within the range of the first godet roller 12 as shown in FIG. 1 and a protruding position where the guide protrudes as compared to the leading end portion of the first godet roller 12 (see FIG. 5(d)).

The second godet roller 13 has an axis substantially in parallel to the left-right direction, and is provided backward of the first godet roller 12. The second godet roller 13 is rotationally driven by a second godet motor 112 (see FIG. 4). The second godet roller 13 is movably supported by a guide rail 15 attached to the frame 16. The guide rail 15 extends upward in the vertical direction toward the rear side in the front-rear direction. The second godet roller 13 is connected to a drive motor 113 (see FIG. 4) by a pulley and a belt which are not illustrated. As the drive motor 113 is driven, the second godet roller 13 moves along the guide rail 15. With this, the second godet roller 13 is movable between a rear position which is indicated by full lines in FIG. 2 and where winding of the yarns Y is performed and a front position which is indicated by one-dot chain lines in FIG. 2 and is closer to the first godet roller 12 than the rear position and where yarn threading is performed. An upper end portion of the guide rail 15 of each take-up unit 3 is attached to a frame 9 which extends in the left-right direction. In this way, the take-up member 10 is positioned.

On a front end face of the frame 16, an operation panel 17 is provided to allow an operator to perform required operations. The surface 17a of the operation panel 17 is a plane orthogonal to the front-rear direction.

### (Winding Unit)

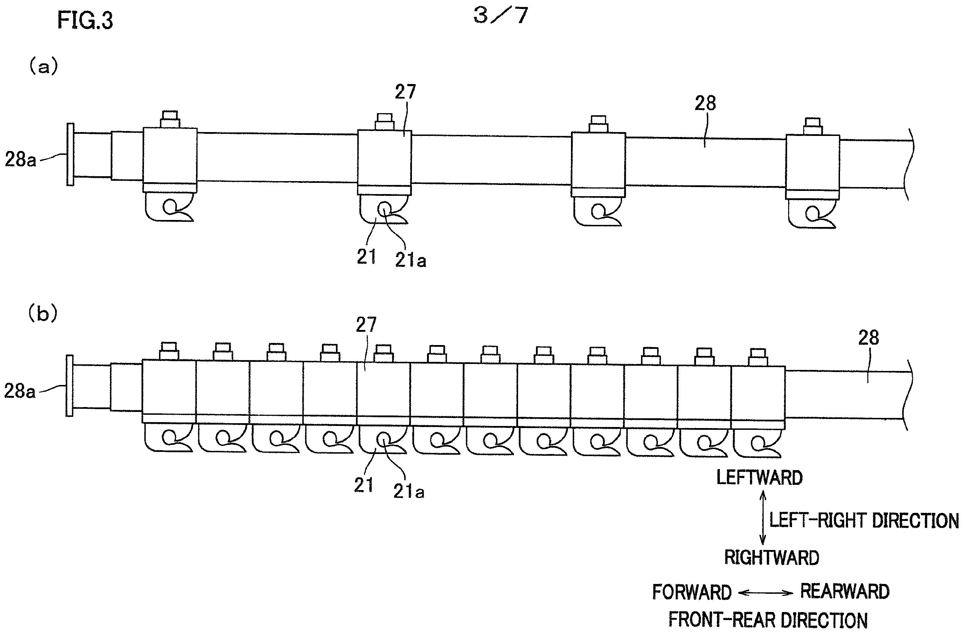

The winding unit 14 is provided on a substantially horizontal installation surface G. The winding unit 14 includes plural fulcrum guides 21 (distribution guides of the present invention), plural traverse guides 22, a turret 23, two bobbin holders 24, and a contact roller 25. As shown in FIG. 2 and FIG. 3(a), and FIG. 3(b), the fulcrum guides 21 are provided for the respective yarns Y and are lined up in the front-rear direction. Each fulcrum guide 21 has a groove 21a which is open to the rear side. Yarn threading onto the fulcrum guide 21 is performed by inserting the yarn Y into the groove 21a from the rear side.

As shown in FIG. 3(a) and FIG. 3(b), the fulcrum guides 21 are attached to sliders 27. The sliders 27 are supported to be movable in the front-rear direction along a guide rail 28. The sliders 27 are connected with a cylinder 114 (see FIG. 4). As the cylinder 114 is driven, the sliders 27 moves in the front-rear direction along the guide rail 28. With this, the fulcrum guides 21 are movable between positions which are shown in FIG. 2 and FIG. 3(a) and where the fulcrum guides 21 are separated from one another in the front-rear direction and winding of the yarns Y is performed and positions which are shown in FIG. 3(b) and where the fulcrum guides 21 are gathered to the front side and yarn threading is performed. A front end face 28a of the guide rail 28 supporting the slider 27 is a plane orthogonal to the front-rear direction.

The traverse guides 22 are provided for the respective yarns Y and are lined up in the front-rear direction. The traverse guides 22 are driven by a common traverse motor 115 (see FIG. 4) and reciprocate in the front-rear direction. With this, the yarns Y threaded onto the traverse guides 22 are traversed about the fulcrum guides 21.

The turret 23 is a disc-shaped member having an axis which is in parallel to the front-rear direction. The turret 23 is rotationally driven by a turret motor 116 (see FIG. 4). The two bobbin holders 24 have axes in parallel to the front-rear direction and are rotatably supported at an upper end portion and a lower end portion of the turret 23, respectively. To each bobbin holder 24, bobbins B provide for the respective yarns Y are attached to be lined up in the front-rear direction. Each of the two bobbin holders 24 is rotationally driven by an individual winding motor 117 (see FIG. 4).

As the upper bobbin holder 24 is rotationally driven, the yarns Y traversed by the traverse guides 22 are wound onto the bobbins B, with the result that packages P are formed. After the completion of the formation of the package P, the positions of the two bobbin holders 24 are changed upside down as the turret 23 is rotated. As a result, the bobbin holder 24 having been at the lower position is moved to the upper position, which allows the yarns Y to be wound onto the bobbins B attached to the bobbin holder 24 having been moved to the upper position, to form packages P. In the meanwhile, the bobbin holder 24 on the upper side moves to the lower side, and collection of the packages P becomes possible.

The winding unit 14 includes a frame 29 which is provided above and to the right of the upper bobbin holder 24. The frame 29 is formed of a substantially rectangular cylinder (square pipe) made of a metal material, and extends in the front-rear direction over the entire length of the bobbin holder 24. On this account, a right end face 29a of the frame 29 is a plane orthogonal to the left-right direction and a top surface 29b of the frame 29 is a plane orthogonal to the up-down direction. Although not detailed, an unillustrated guide plate is attached to the frame 29 to guide the yarns Y at the time of yarn threading onto the bobbins B attached to the upper bobbin holder 24. The front and rear end portions of the frame 29 are connected to a later-described base portion 20b via connection members 30, respectively. Between the frame 29 and the base portion 20b, yarn guides (e.g., initial yarn threading guides of Japanese Unexamined Patent Publication No. 2004-323166) which are used for yarn threading onto the bobbins B attached to the upper bobbin holder 24 and are lined up in the front-rear direction, a yarn threading mechanism, etc. are provided.

The contact roller 25 is a roller having an axis substantially in parallel to the front-rear direction and is provided immediately above the upper bobbin holder 24. The contact roller 25 makes contact with the surface of the package P formed by winding the yarn Y onto the bobbin B attached to the upper bobbin holder 24, so as to apply a contact pressure to the surface of the package P on which the yarn Y is being wound.

These components of the winding unit 14 are provided on a base 20. In the base 20, an operation panel 26 which allows an operator to perform necessary operations is provided on a front end face of an upper base portion 20a which supports the traverse guide 22, the guide rail 28, etc. The surface 26a of the operation panel 26 is a plane orthogonal to the front-rear direction. A top surface 20a1 of the base portion 20a is a plane orthogonal to the up-down direction. A rear end portion of the base portion 20a is supported by a base portion 20d which extends in the up-down direction. The base portion 20d is a portion where the turret 23 or the like is provided. The frame 29 is positioned to the right of the base portion 20a.

In the base 20, a lower base portion 20b in contact with the installation surface G is provided with two rails 20b1 extending in the front-rear direction and a connection member 20b2 connecting front end portions of the two rails 20b1 to each other. The rear end portion of each rail 20b1 is connected to the base portion 20d. A positioning hole 20c is formed in the connection member 20b2. The positioning hole 20c is a through hole extending in the up-down direction.

The winding unit 14 is positioned by one positioning pin 41 and two positioning guides 42. To be more specific, the positioning pin 41 is slightly shorter in diameter than the positioning hole 20c and is inserted into the positioning hole 20c to protrude upward from the installation surface G. The two positioning guides 42 are substantially L-shaped and are provided on the installation surface G to correspond to rear corner portions of the base portion 20b, respectively. In the left-right direction, the distance between the two positioning guides 42 is slightly longer than the length of the base portion 20b. The rear end face of the base portion 20b is pressed onto the two positioning guides 42, and the rear end portion of the base portion 20b is sandwiched between the two positioning guides 42 in the left-right direction. With this arrangement, the winding unit 14 is positioned by the positioning pin 41 and the two positioning guides 42.

When the winding unit 14 is mounted, to begin with, the winding unit 14 is provided so that the rear end face of the base portion 20b is pressed onto the two positioning guides 42 and the rear end portion of the base portion 20b is sandwiched between the two positioning guides 42 in the left-right direction. Thereafter, the positioning pin 41 is inserted into the positioning hole 20c and is fixed to the installation surface G.

### (Yarn Threading Robot)

Now, the yarn threading robot 4 will be described. As shown in FIG. 1 and FIG. 2, the yarn threading robot 4 includes a main body 31 and a yarn threading arm 32.

The main body 31 is rectangular parallelepiped in shape. Inside the main body 31, members such as a yarn threading controller 102 (see FIG. 4) for controlling operations of the yarn threading arm 32 are provided. On the front side of the take-up units 3, two guide rails 35 are provided at an interval in the front-rear direction. Each guide rail 35 extends in the left-right direction across plural take-up units 3. The main body 31 hangs down from the two guide rails 35 and is movable in the left-right direction along the two guide rails 35.

To be more specific, at the upper end portion of the main body 31, as shown in FIG. 2, wheels 36 are provided. The wheels 36 are provided on the top surfaces of the respective guide rails 35. The wheels 36 are rotationally driven by a movement motor 121 (see FIG. 4). As the wheels 36 are rotationally driven, the main body 31 moves in the left-right direction along the two guide rails 35.

The yarn threading arm 32 includes a robotic arm 51 and a yarn threading unit 52. The robotic arm 51 is attached to a bottom surface of the main body 31. The robotic arm 51 includes arms 51a and joints 51b connecting the arms 51a with one another. Each joint 51b includes an arm motor 122 (see FIG. 4). As the arm motor 122 is driven, the arm 51a is swung about the joint 51b. In this way, the robotic arm 51 is moved.

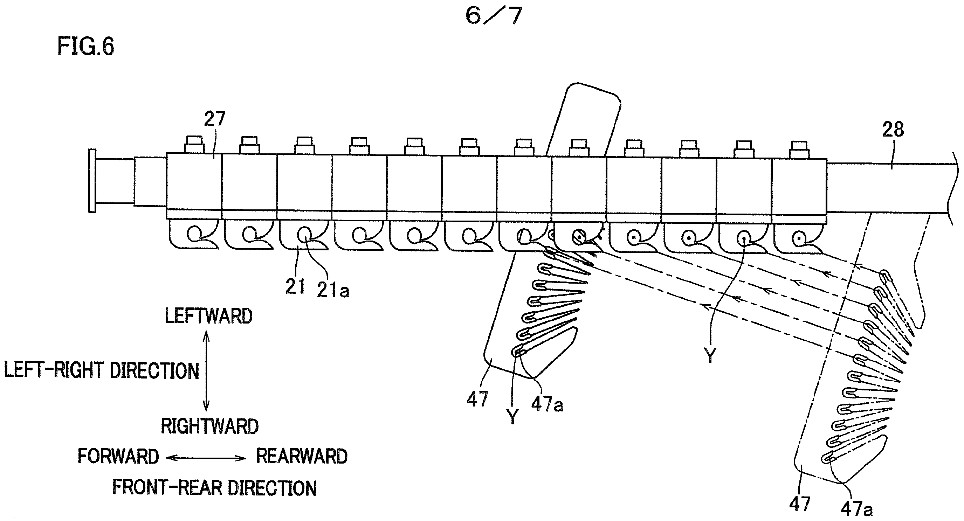

The yarn threading unit 52 is attached to a leading end portion of the robotic arm 51. The yarn threading unit 52 includes devices for distributing the yarns Y and threading them onto the respective fulcrum guides 21 as described below, such as an aspirator 39 configured to suck and retain the yarns Y, a cutter 38 for cutting the yarns Y, a comb-shaped yarn threading assisting tool 47 (see FIG. 6) having grooves 47a, and an opening device (not illustrated) used for inserting the yarns Y captured by the aspirator 39 into the corresponding grooves 47a of the yarn threading assisting tool 47. As described below, the yarn threading unit 52 includes a sensor 46 for detecting the positions of the take-up member 10 and the winding unit 14. The sensor 46 is, for example, an optical or acoustic distance sensor.

### (Electric Structure of Spun Yarn Take-up System)

Now, the electric structure of the spun yarn take-up system 1 will be described. In the spun yarn take-up system 1, as shown in FIG. 4, a controller 101 is provided for each take-up unit 3, and the controller 101 controls the first godet motor 111, the second godet motor 112, the drive motor 113, the cylinders 114, 118, and 119, the traverse motor 115, the turret motor 116, the winding motor 117, or the like. When a signal is input in response to an operation to the operation panel 17, the controller 101 performs control corresponding to the input signal. Although each take-up unit 3 includes two winding motors 117, FIG. 4 shows only one winding motor 117. FIG. 4 shows the controller 101, the first godet motor 111, the second godet motor 112, the drive motor 113, the cylinder 114, the traverse motor 115, the turret motor 116, the winding motor 117, the cylinder 118, and the operation panel 17 of only one take-up unit 3.

In the spun yarn take-up system 1, a controller 102 is provided in the yarn threading robot 4. The controller 102 controls the movement motor 121, the arm motor 122, the yarn threading unit 52, the sensor 46, and the like. To the controller 102, a signal corresponding to a detection result is input from the sensor 46. When a signal is input in response to an operation to the operation panel 26, the controller 102 performs control corresponding to the input signal. In addition to the arrangement above, the yarn threading robot 4 includes a storage unit 123. The storage unit 123 is, for example, provided in the main body 31. The storage unit 123 is provided to store information required to drive the yarn threading robot 4, such as arm movement information regarding the way of moving the robotic arm 51 and information of the positions of the take-up member 10 and the winding unit 14 of each take-up unit 3. As described below, the controller 102 moves the robotic arm 51 by controlling the arm motor 122 based on the information stored in the storage unit 123, when yarn threading onto the take-up unit 3 is carried out. While the robotic arm 51 includes plural joints 32b and plural arm motors 122 corresponding to the respective joints 32b, FIG. 4 shows only one arm motor 122.

In addition to the above, the spun yarn take-up system 1 includes a controller 100 which serves to control the entire system. The controller 100 is connected to the controllers 101 of the take-up units 3 and the controller 102 of the yarn threading robot 4. The controller 100 controls these controllers so as to control the entire spun yarn take-up system 1.

### (Operations of Yarn Threading Robot in Yarn Threading)

Now, the following will describe the operations of the yarn threading robot 4 when the yarn threading robot 4 is caused to perform yarn threading onto the godet rollers 12 and 13 and the fulcrum guides 21.

Before causing the yarn threading robot 4 to perform the yarn threading, the aspirator 11 is caused to suck and retain the yarns Y spun out from the spinning apparatus in advance at the take-up unit 3 where the yarn threading will be performed. Furthermore, the second godet roller 13 of this take-up unit 3 is moved to the above-described front position (indicated by the one-dot chain line in FIG. 2) in advance. Furthermore, the fulcrum guides 21 are positioned at the above-described front positions (positions shown in FIG. 3(b)) in advance.

To perform the yarn threading onto the godet rollers 12 and 13, the yarn regulating guide 19, and the fulcrum guides 21 by the yarn threading robot 4, to begin with, the main body 31 is moved to a yarn threading position in front of the take-up unit 3 onto which yarn threading is to be performed.

After the main body 31 is moved to the yarn threading position corresponding to the take-up unit 3 onto which the yarn threading is to be performed, the robotic arm 51 is moved so that the yarn threading unit 52 is moved to a position where the leading end portion of the aspirator 39 is pressed onto the yarns Y as shown in FIG. 5 (a). At this stage, the cutter 38 is below the aspirator 39 and the yarns Y passes through the cutter 38. Subsequently, the aspirator 39 is caused to perform sucking and the yarns Y are cut by the cutter 38. As a result, the yarns Y having been cut are sucked and retained by the aspirator 39, and handover of the yarns Y from the aspirator 11 to the aspirator 39 is carried out as shown in FIG. 5(b).

Subsequently, as shown in FIG. 5(c) and FIG. 5(d), the yarn regulating guide 19 is moved to the above-described protruding position and then, by the robotic arm 51, the yarn threading unit 52 is moved to a position where in the left-right direction the yarns Y can be threaded onto the yarn regulating guide 19, and then is moved to a position below the first godet roller 12. In this way, the yarns Y are threaded onto the yarn regulating guide 19. In the present embodiment, when, for example, a signal for driving the cutter 38 is output, it is determined that the handover of the yarns Y from the aspirator 11 to the aspirator 39 is completed, and the operation above is carried out.

Subsequently, as shown in FIG. 5(e), the yarn threading unit 52 is moved by the robotic arm 51 to the base end side in the axial direction of the first godet roller 12, and the yarn regulating guide 19 is moved by the cylinder 119 to the above-described withdrawn position. As such, the yarns Y are moved to a position where the yarns Y are overlapped with the outer circumferential surface of the godet roller 12. Thereafter, as the yarn threading unit 52 is moved by the robotic arm 51, the yarns Y are wound onto the godet rollers 12 and 13 as shown in FIG. 5(f).

Subsequently, the yarns Y are threaded onto the fulcrum guides 21 one by one. As shown in FIG. 6, yarn threading onto the fulcrum guides 21 is carried out in such a way that, in the yarn threading unit 52, the yarns Y are inserted into the corresponding grooves 47a of the yarn threading assisting tool 47 and then the yarn threading assisting tool 47 is moved by the robotic arm 51 from the rear side toward the front side. As the yarn threading assisting tool 47 is moved in this way, the yarns Y are inserted into the corresponding fulcrum guides 21 from the grooves 21a (see Japanese Unexamined Patent Publication No. 2015-164875). After the completion of the yarn threading onto the fulcrum guides 21, the second godet roller 13 is moved to the above-described rear position and the fulcrum guides 21 are moved to the above-described positions which are separated from one another in the left-right direction.

### (Control of Yarn Threading Robot)

As described above, yarn threading onto the yarn regulating guide 19, the godet rollers 12 and 13, and the fulcrum guides 21 of each take-up unit 3 is carried out by the yarn threading robot 4. To operate the yarn threading robot 4 in this way under the control of the controller 102, however, it is necessary for the yarn threading robot 4 to set the movement of the robotic arm 51 in yarn threading in advance, in accordance with the position of the take-up unit 3 (the take-up member 10 and the winding unit 14).

In the take-up unit 3, the take-up member 10 and the winding unit 14 are maintained by an operator or the take-up member 10 and the winding unit 14 are replaced at the time of, for example, a failure. After the maintenance or the replacement, a slight positional deviation occurs in the take-up member 10 and the winding unit 14. Furthermore, there is a slight positional deviation in the take-up member 10 and the winding unit 14 with reference to the yarn threading position, between the take-up units 3 constituting the spun yarn take-up system 1.

To be more specific, when the winding unit 14 is installed while being positioned with respect to the positioning pin 41 and the positioning guides 42 as described above, it is necessary to arrange the positioning hole 20c to be slightly longer in diameter than the positioning pin 41 and to arrange the base portion 20b to be slightly shorter than the distance between the two positioning guides 42 in the left-right direction. On this account, slight positional deviations occur in the winding unit 14 in the left-right direction and in the front-rear direction, at the time of the installation. Furthermore, when there is an irregularity in height in the installation surface G, there is a position deviation in the winding unit 14 in the up-down direction. Furthermore, a positional deviation occurs in the take-up member 10 due to an error in the attachment of the take-up member 10 to the frame 9 and tilt of the frame 9.

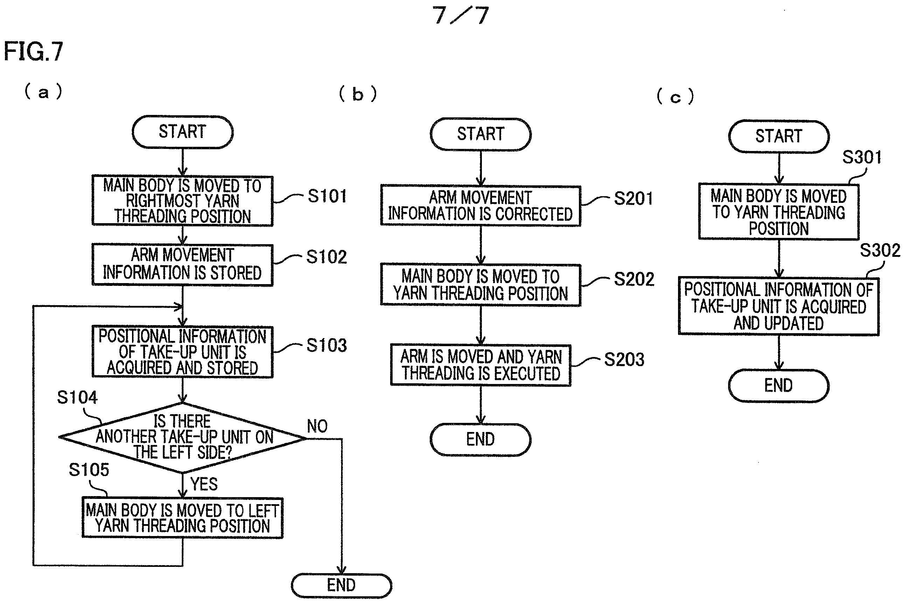

It is therefore necessary to perform the setting of the yarn threading robot 4 in consideration of the above-described deviations, in order to cause the yarn threading robot 4 to properly perform yarn threading onto each take-up unit 3. In the present embodiment, a process shown in the flow in FIG. 7(a) is carried out before the spun yarn take-up system 1 is activated, e.g., when the spun yarn take-up system 1 is installed. To be more specific, to begin with, the main body 31 of the yarn threading robot 4 is moved to a yarn threading position corresponding to the rightmost take-up unit 3 (first yarn processing apparatus of the present invention; hereinafter, this unit may be referred to as a take-up unit 3A) among the take-up units 3 (S101). The movement of the main body 31 in S101 is, for example, carried out in such a way that the controller 102 controls the movement motor 121 in response to an input to an unillustrated operation panel or the like of the yarn threading robot 4 by an operator.

Subsequently, as the operator moves the robotic arm 51 along a track which is desired when yarn threading is performed onto this take-up unit 3, arm movement information which is information regarding how to move the robotic arm 51 is stored in the storage unit 123 (S102, so-called teaching).

Then information of the position of the take-up unit 3 is acquired and stored in the storage unit 123 (S103). To be more specific, in S103, the controller 102 controls the arm motor 122 so as to move the robotic arm 51 along a predetermined measuring track, with the result that the sensor 46 attached to the yarn threading unit 52 passes plural measurement positions one by one and the sensor 46 detects the position of the take-up unit 3 when the sensor 46 reaches each measurement position. Based on the detection result of the sensor 46, the controller 102 causes the storage unit 123 to store the information of the position of the take-up unit 3. The measurement track is stored in the storage unit 123 in advance by means of the teaching.

In S103, in regard to each of the take-up member 10 and the winding unit 14, at least one position in the left-right direction, at least one position in the front-rear direction, and at least one position in the up-down direction (position in three directions orthogonal to one another in the present invention) are stored in the storage unit 123. The storing of the positional information in the storage unit 123 may not be performed by the controller 102. For example, the information may be stored in the storage unit 123 in such a way that an operator inputs information regarding a position corresponding to a detection result of the sensor 46 by operating an unillustrated operation panel or the like of the yarn threading robot 4.

The positional information of the take-up member 10 stored in the storage unit 123 in S103 is information of the position of a part in the vicinity of the godet rollers 12 and 13 and the yarn regulating guide 19 onto which yarn threading is performed by the yarn threading robot 4. To be more specific, for example, a position in the left-right direction, such as a part of the right end face 16a of the frame 16 between the godet roller 12 and the yarn regulating guide 19, the leading end surface 12a of the first godet roller 12, etc., is stored in the storage unit 123. Furthermore, for example, a position in the front-rear direction of the surface 17a of the operation panel 17 on the front end face of the frame 16, etc. is stored in the storage unit 123. Furthermore, for example, a position in the up-down direction of the top surface 19a of the yarn regulating guide 19, etc. is stored in the storage unit 123.

The positional information of the winding unit 14 stored in the storage unit 123 is information of the position of a part in the vicinity of the fulcrum guide 21 onto which yarn threading is performed by the yarn threading robot 4. To be more specific, for example, a position in the left-right direction of the right end face 29a of the frame 29, etc. is stored in the storage unit 123. Furthermore, for example, a position in the front-rear direction, such as the surface 26a of the operation panel 26 on the front end face of the base portion 20a, the front end face 28a of the guide rail 28 supporting the fulcrum guides 21, etc., is stored in the storage unit 123. Furthermore, a position in the up-down direction of the top surface 29b of the frame 29, the top surface 20a1 of the base portion 20a, etc. is stored in the storage unit 123.

In the present embodiment, because the position of the take-up unit 3 is detected by the sensor 46 while the main body 31 is positioned at the yarn threading position, the information stored in the storage unit 123 is positional information with reference to the yarn threading position.

Subsequently, when there is another take-up unit 3 to the left of the take-up unit 3 from which the positional information has been acquired in S103 (YES in S104), the main body 31 is moved to the yarn threading position corresponding to the left-neighboring take-up unit 3 (S105) and the process returns to S103. Subsequently, when information of the positions of all take-up units 3 is acquired and there is no take-up unit 3 to the left of the take-up unit 3 from which the positional information has been acquired in S103 (NO in S104), the process is terminated. A such, positional information is acquired from the take-up units 3 leftward and one by one, and the acquired information is stored in the storage unit 123.

In the explanations above, by the teaching, the arm movement information regarding how the robotic arm 51 is moved when the yarn threading is performed onto the rightmost take-up unit 3 is stored in the storage unit 123 and the positional information is obtained leftward one by one from the rightmost take-up unit 3 and stored in the storage unit 123. The disclosure, however, is not limited to this arrangement. For example, by the teaching, the arm movement information regarding how the robotic arm 51 is moved when yarn threading onto a take-up unit 3 different from the rightmost take-up unit 3 may be stored in the storage unit 123. Furthermore, information regarding a position of each take-up unit 3 may be obtained in a different order and stored in the storage unit 123.

When the spun yarn take-up system 1 is activated, to perform yarn threading onto a take-up unit 3 by the yarn threading robot 4, as shown in FIG. 7(b), the controller 102 corrects the arm movement information stored in the storage unit 123 in S101 based on a difference between the position of the take-up unit 3 onto which the yarn threading is to be performed (second yarn processing apparatus in the present invention) and the position of the above-described take-up unit 3A (reference position in the present invention) (S201). To be more specific, the arm movement information is corrected in such a way that, in the left-right direction, the front-rear direction, and the up-down direction, the track of the movement of the robotic arm 51 is adjusted to correspond to the difference between the position of the take-up unit 3 onto which the yarn threading is to be performed and the position of the take-up unit 3A.

The arm movement information includes information of how to move the robotic arm 51 when yarn threading is performed onto the take-up member 10 (the godet rollers 12 and 13 and the yarn regulating guide 19) and information of how to move the robotic arm 51 when yarn threading is performed onto the winding unit 14 (fulcrum guides 21). In S201, based on the information of how to move the robotic arm 51 when yarn threading is performed onto the take-up member 10, the correction is carried out based on the difference between the position of the take-up member 10 of the take-up unit 3 onto which the yarn threading is to be performed and the take-up member 10 of the take-up unit 3A. Furthermore, based on the information of how to move the robotic arm 51 when yarn threading is performed onto the winding unit 14, the correction is carried out based on the difference between the position of the winding unit 14 of the take-up unit 3 onto which the yarn threading is to be performed and the winding unit 14 of the take-up unit 3A. When positions of two or more parts in one direction are stored in S103, for example, the arm movement information is corrected based on an average of correction amounts calculated based on positional differences of the respective parts. Alternatively, the arm movement information is corrected based on a correction amount calculated based on a positional difference regarding one of the stored parts.

Subsequently, the controller 102 controls the movement motor 121 so as to move the main body 31 to the yarn threading position corresponding to the take-up unit 3 onto which the yarn threading is to be performed (S202). Then the controller 102 controls the arm motor 122 and the yarn threading unit 52 to cause the yarn threading arm 32 to perform the yarn threading onto the take-up unit 3 (S203). At this stage, the robotic arm 51 is moved based on the arm movement information having been corrected in S201 (so-called playback). While S201 and S202 are executed in this order in this explanation, the order of executing S201 and S202 may be reversed, or S201 and S202 may be simultaneously executed.

When the replacement or maintenance of the take-up member 10 and the winding unit 14 is carried out at the activation of the spun yarn take-up system 1, etc., as shown in FIG. 7(c), the controller 102 moves the main body 31 to the yarn threading position corresponding to the take-up unit 3 where the replacement or maintenance is carried out (S301). Then the position of this take-up unit 3 is detected by the sensor 46 in a manner similar to S103, and the information regarding the position of the take-up unit 3 stored in the storage unit 123 is updated based on the detection result of the sensor 46 (S302). In S302, being similar to S103, the information stored in the storage unit 123 may be updated in such a way that an operator inputs information regarding a position corresponding to a detection result of the sensor 46 by operating an unillustrated operation panel or the like of the yarn threading robot 4.

The teaching in S102 takes long time. For this reason, when, being different from the present invention, teaching is performed as in S101 for each of the take-up units 3 of the spun yarn take-up system 1, considerable time is required to complete the teaching for all take-up units 3. As a result, the time interval between the completion of the installation of the spun yarn take-up apparatus 1 and the activation of the spun yarn take-up system 1 becomes long. Furthermore, when, being different from the present invention, a take-up unit 3 (a take-up member 10 and a winding unit 14) is replaced or maintained and teaching is performed as in S102 for the replaced or maintained take-up unit 3, it takes considerable time to perform this teaching. As a result, the time interval between the completion of the replacement of maintenance of the take-up unit 3 and the activation of the take-up unit 3 becomes long.

To shorten this time interval, being different from the present invention, for example, a camera is mounted on the yarn threading unit 52 or the like, and when yarn threading is performed onto the take-up unit 3, referential movement which is set in advance is carried out by the robotic arm 51 and the movement is taken by the camera, and the movement of the robotic arm 51 is corrected based on a result of image processing or the like of the taken images. Also in this case, teaching must be done for, for example, one take-up unit 3, but no teaching is required for the other take-up units 3 and the take-up unit 3 after the replacement or maintenance. This arrangement, however, requires complicated processes such as image processing for the images taken by the camera, in order to correct the movement of the robotic arm 51.

In regard to the above, according to the present embodiment, by the teaching for one take-up unit 3A, the arm movement information is stored in the storage unit 123 and the positional information of each take-up unit 3 is stored. The acquisition of the positional information of the take-up unit 3 takes little time as compared to the teaching. When yarn threading is performed onto a take-up unit 3 other than the take-up unit 3A or onto a take-up unit 3 which has been replaced or maintained, the arm movement information stored in the storage unit 123 is corrected based on the difference between the position of the take-up unit 3A and the position of the take-up unit 3 onto which the yarn threading is to be performed, and the robotic arm 51 is moved based on the corrected arm movement information. This correction process is easily done as compared to the above-described image processing. In this way, in the present embodiment, it is possible to cause, by a simple process, the yarn threading arm 32 to properly perform yarn threading onto the take-up unit 3 in accordance with the position of the take-up unit 3.

In the present embodiment, in connection with yarn threading by the yarn threading robot 4 onto the godet rollers 12 and 13 and the yarn regulating guide 19 of the take-up member 10 and the fulcrum guides 21 of the winding unit 14, the positions of the take-up member 10 and the winding unit 14 are obtained and stored in the storage unit 123 for each take-up unit 3. Based on the information of the position of each of the take-up member 10 and the winding unit 14, the information regarding how to move the robotic arm 51 in the yarn threading onto each of the take-up member 10 and the winding unit 14 is corrected. With this arrangement, by moving the robotic arm 51 based on the corrected arm movement information, it is possible to cause the yarn threading arm 32 to properly perform yarn threading onto the godet rollers 12 and 13 and the yarn regulating guide 19 of the take-up member 10 and onto the fulcrum guides 21 of the winding unit 14.

In the present embodiment, because the sensor 46 is provided in the yarn threading unit 52 of the yarn threading arm 32, the sensor 46 is able to detect the position of the take-up unit 3 as the robotic arm 51 to which the yarn threading unit 52 is attached is moved.

Furthermore, when the sensor 46 is provided in the yarn threading unit 52 of the yarn threading arm 32 as in the present embodiment, the sensor 46 is able to detect the position of a desired part of the take-up unit 3 as the robotic arm 51 is moved. This makes it possible to increase the degree of freedom in the selection of a part of the take-up unit 3 detected by the sensor 46.

In the present embodiment, the arm movement information is corrected based on the information of the position of a part of the take-up member 10 in the vicinity of the godet rollers 12 and 13 and the yarn regulating guide 19 onto which yarn threading is performed by the yarn threading robot 4 and the information of the position of a part of the winding unit 14 in the vicinity of the fulcrum guides 21 onto which yarn threading is performed by the yarn threading robot 4. On this account, by moving the robotic arm 51 based on the corrected arm movement information, it is possible to cause the yarn threading arm 32 to properly perform yarn threading onto the godet rollers 12 and 13 and the yarn regulating guide 19 of the take-up member 10 and onto the fulcrum guides 21 of the winding unit 14.

In the present embodiment, the right end face 16a of the frame 16, the leading end surface 12a of the first godet roller 12, the surface 17a of the operation panel 17, the top surface 19a of the yarn regulating guide 19, the right end face 29a of the frame 29, the surface 26a of the operation panel 26, the front end face 28a of the guide rail 28, the top surface 29b of the frame 29, and the top surface 20a1 of the base portion 20a are all planes. The sensor 46 detects the positions of these planes in the direction orthogonal to each plane. On this account, even if a detection position (where light or an acoustic wave from the sensor 46 hits) of the sensor 46 is slightly deviated, a detection result of the sensor 46 is hardly changed, and hence the positional information stored in the storage unit 123 is accurate.

In the present embodiment, because in each take-up unit 3 the take-up member 10 is positioned with respect to the frame 9 and the winding unit 14 is positioned with respect to the positioning pin 41 and the positioning guides 42, the positions of the take-up member 10 and the winding unit 14 are not significantly deviated in the rotational direction. The yarn threading arm 32 is therefore able to perform yarn threading onto each take-up unit 3 because at least one position in the left-right direction, at least one position in the front-rear direction, and at least one position in the up-down direction are stored in regard to each of the take-up member 10 and the winding unit 14 and the robotic arm 51 is moved based on the arm movement information corrected based on these sets of positional information.

The following will describe modifications of the above-described embodiment of the present invention.

While in the embodiment above the take-up member 10 is positioned with respect to the frame 9 and the winding unit 14 is positioned by the positioning pin 41 and the positioning guides 42, the disclosure is not limited to this arrangement. The arrangement for positioning the take-up member 10 and the winding unit 14 may not be provided. In this case, as compared to the embodiment above, a positional deviation in the rotational direction tends to occur in the take-up member 10 and the winding unit 14 when the take-up member 10 and the winding unit 14 are installed. For this reason, what is stored in this case is, for example, information of the positions of two or more parts of each of the take-up member 10 and the winding unit 14 in two or more of the left-right direction, the front-rear direction, and the up-down direction. With this arrangement, the degree of the positional deviation in the rotational direction between the take-up unit 3A and the take-up unit 3 onto which yarn threading is to be performed is detectable based on a positional difference between the two or more parts of the units. Because the arm movement information is corrected based on the positional difference between the two or more parts of the units, the arm movement information is suitably corrected in regard to the above-described deviation in the rotational direction.

In the embodiment above, information of the position of a part in the vicinity of the godet rollers 12 and 13 and the yarn regulating guide 19 of the take-up member 10 is stored in the storage unit 123 and information of the position of a part of the winding unit 14 in the vicinity of the fulcrum guides 21 is stored in the storage unit 123. The disclosure, however, is not limited to this arrangement. Information of the position of a part the take-up member 10, which is remote from the godet rollers 12 and 13 and the yarn regulating guide 19, may be stored in the storage unit 123, and information of the position of a part of the winding unit 14, which is remote from the fulcrum guides 21, may be stored in the storage unit 123.

While in the embodiment above the position of a flat part of each of the take-up member 10 and the winding unit 14 in the direction orthogonal to the flat part is acquired and stored in the storage unit 123, the disclosure is not limited to this arrangement. The position of a non-flat part of each of the take-up member 10 and the winding unit 14 (e.g., a curved part or an uneven part) may be acquired and stored in the storage unit 123.

In the embodiment above, positional information in the left-right direction, the front-rear direction, and the up-down direction of each of the take-up member 10 and the winding unit 14 is stored in the storage unit 123. The disclosure, however, is not limited to this arrangement. For example, information of the positon of the take-up member 10 in one or some of the left-right direction, the front-rear direction, and the up-down direction and information of the position of the winding unit 14 in the remaining direction may be stored in the storage unit 123. Alternatively, information of the positons of only one of the take-up member 10 and the winding unit 14 in the left-right direction, the front-rear direction, and the up-down direction may be stored in the storage unit 123. The arm movement information is suitably corrected by these arrangements when the positional relationship between the take-up member 10 and the winding unit 14 rarely changes in the take-up unit 3 because, for example, the take-up member 10 and the winding unit 14 are integrated in the take-up unit 3.

In the embodiment above, information of the position of the take-up unit 3 in three directions orthogonal to one another, which are the left-right direction, the front-rear direction, and the up-down direction, is stored in the storage unit 123 and the arm movement information is corrected based on the information of the position in the three directions. The disclosure, however, is not limited to this arrangement. Information of the position of the take-up unit 3 in three directions orthogonal to one another, which are not the left-right direction, the front-rear direction, and the up-down direction, may be stored in the storage unit 123, and the arm movement information may be corrected based on the information of the position in these three directions.

Alternatively, information of the position of the take-up unit 3 in two orthogonal directions or the position of the take-up unit 3 in one direction may be stored in the storage unit 123, and the arm movement information may be corrected based on the positional information stored in the storage unit 123. For example, when there is little irregularity in height in the installation surface G, information of the position in two directions, i.e., the left-right direction and the front-rear direction may be stored in the storage unit 123, and the arm movement information may be corrected based on the positional information in these two directions. Furthermore, for example, when a positional deviation which requires the correction of the arm movement information occurs only in one direction in the take-up member 10 and the winding unit 14, information of the position in the one direction may be stored in the storage unit 123, and the arm movement information may be corrected based on this positional information.

In the embodiment above, information of the position of each take-up unit 3 with reference to the yarn threading position corresponding to that take-up unit is acquired and stored in the storage unit 123. The disclosure, however, is not limited to this arrangement. For example, positional information with reference to a shared reference position may be acquired for all take-up units 3 and stored in the storage unit 123. In this case, irrespective of a positional deviation of the take-up unit 3, a position stored in the storage unit 123 is different in the left-right direction between the take-up units 3 by an integral multiple of the alignment interval between the take-up units 3. On this account, when yarn threading is performed onto a take-up unit 3 which is away from the take-up unit 3A by N units, the arm movement information must be corrected in the left-right direction based on a value calculated by subtracting the length which is N times as long as the alignment interval between the take-up units 3 from a difference between the position of the take-up unit 3 onto which the yarn threading is to be performed and the position of the take-up unit 3A.

While in the embodiment above the arm movement information is corrected when yarn threading is performed onto the take-up unit 3, the disclosure is not limited to this arrangement. For example, at a timing when yarn threading onto the take-up unit 3 is not performed, e.g., immediately after positional information of each take-up unit 3 is stored in the storage unit 123, the arm movement information stored in the storage unit 123 may be corrected based on a difference between the position of each take-up unit 3 and the position of the take-up unit 3A, and the corrected arm movement information regarding each take-up unit 3 may be stored in the storage unit 123. In this case, when yarn threading is performed onto a take-up unit 3, the robotic arm 51 is moved based on the corrected arm movement information which is stored in the storage unit 123 and relates to the take-up unit 3 onto which the yarn threading is to be performed.

While in the embodiment above the position of the take-up unit 3 is acquired and stored in the storage unit 123 when the spun yarn take-up system 1 is installed or the take-up unit 3 is replaced or maintained, the disclosure is not limited to this arrangement. For example, only the arm movement information and information of the position of the take-up unit 3A are stored in the storage unit 123 when the spun yarn take-up system 1 is installed, and information of the position of a take-up unit 3 different from the take-up unit 3A is detected by the sensor 46 immediately before yarn threading onto that take-up unit 3 and stored in the storage unit 123.

While in the embodiment above the sensor 46 is provided in the yarn threading unit 52 to detect a position, the disclosure is not limited to this arrangement. The sensor 46 may be directly attached to the robotic arm 51. Alternatively, the sensor 46 may be attached to another part of the yarn threading robot 4, such as the main body 31. Furthermore, a sensor for detecting a position may not be provided in the yarn threading robot 4. For example, an operator detects the position of each take-up unit 3 by using a position detector such as a distance sensor which is able to directly detect the position of the take-up unit 3, and stores positional information corresponding to the detection result in the storage unit 123 by inputting the information to the yarn threading robot 4.

While in the embodiment above the yarn threading robot 4 performs yarn threading onto the godet rollers 12 and 13, the yarn regulating guide 19, and the fulcrum guides 21, the disclosure is not limited to this arrangement. The yarn threading robot 4 may perform yarn threading onto only one or some of these members, or onto another yarn guide of the take-up unit 3.

In the embodiment above, before the spun yarn take-up system 1 is activated, the teaching is carried out in such a way that the operator moves the robotic arm 51 to store, in the storage unit 123, the arm movement information regarding how the robotic arm 51 is moved when yarn threading is performed onto the take-up unit 3A which is one of the take-up units 3. The disclosure, however, is not limited to this arrangement. For example, before the spun yarn take-up system 1 is installed, teaching is carried out by using a take-up unit 3 and a yarn threading robot 4 provided at a different place, and data of arm movement information is acquired and data of the position (reference position in the present invention) of the take-up unit 3 when the teaching is carried out is acquired. When the spun yarn take-up system 1 is installed, these sets of data are stored in the storage unit 123. In this case, after the spun yarn take-up system 1 is installed, information of the positon of each take-up unit 3 is detected by the sensor 46 and stored in the storage unit 123, and the arm movement information is corrected based on a difference between the position of the take-up unit 3 acquired in the teaching and the position of the take-up unit 3 onto which the yarn threading is to be performed.

While in the embodiment above the yarn threading robot 4 hangs down from the guide rails 35, the disclosure is not limited to this arrangement. For example the yarn threading robot may be mounted on a guide rail which is provided on the installation surface G, and movable along the guide rail.

While in the examples above the yarn threading robot is provided for plural take-up units in a shared manner and performs yarn threading onto these take-up units, the disclosure is not limited to this arrangement. The yarn threading robot may perform yarn threading onto only one take-up unit. Also in this case, only the update of the positional information of the take-up unit is required and repeat of the teaching is not required, when the take-up unit is replaced or maintained. On this account, the time interval between the replacement or maintenance of the take-up unit and the activation of the take-up unit is short.

While the explanations above relate to cases where the present invention is applied to a yarn threading robot configured to perform yarn threading onto a take-up unit taking up spun yarns, the disclosure is not limited to this arrangement. The present invention may be applied to an automatic yarn threading device configured to perform yarn threading onto a yarn processing apparatus which is not a take-up unit.

## Claims

1. An automatic yarn threading device (4) configured to perform yarn threading onto a yarn processing apparatus (3), comprising:
a yarn threading arm (32);
a storage unit (123) which is configured to store arm movement information regarding how the yarn threading arm (32) is moved when the yarn threading arm (32) is caused to perform the yarn threading onto the yarn processing apparatus (3) at a predetermined reference position; and
a controller (102),
**characterized in that**
the storage unit (123) is further configured to store information of an actual position of the yarn processing apparatus (3), and
when the yarn threading arm (32) is caused to perform the yarn threading onto the yarn processing apparatus (3), the controller (102) moving the yarn threading arm (32) based on the arm movement information which is corrected based on a difference between the actual position of the yarn processing apparatus (3) and the reference position,
the automatic yarn threading device (4) being further configured to perform the yarn threading onto plural yarn processing apparatuses (3) each of which is identical with the yarn processing apparatus (3), wherein,
the storage unit (123) is configured to store the arm movement information regarding how the yarn threading arm (32) is moved when the yarn threading arm (32) is caused to perform the yarn threading onto a first yarn processing apparatus (3A) among the yarn processing apparatuses (3) and information of an actual position of each of the yarn processing apparatuses (3), and
when the yarn threading arm (32) is caused to perform the yarn threading onto a second yarn processing apparatus (3) which is different from the first yarn processing apparatus (3A) among the yarn processing apparatuses (3), the controller (102) moving the yarn threading arm (32) based on the arm movement information which is corrected based on a difference between the position of the first yarn processing apparatus (3A) and the position of the second yarn processing apparatus (3).

2. The automatic yarn threading device (4) according to claim 1, wherein,
the yarn processing apparatuses (3) are lined up in a predetermined arrangement direction,
a main body (31) movable in the arrangement direction is provided, the yarn threading arm (32) being attached to the main body (31),
the controller (102) selectively moves the main body (31) to one of yarn threading positions corresponding to the respective yarn processing apparatuses (3), and
as information of the position of each of the yarn processing apparatuses (3), the storage unit (123) stores information of the position of each of the yarn processing apparatuses (3) with reference to a corresponding one of the yarn threading positions.

3. The automatic yarn threading device (4) according to any one of claims 1 to 2, further comprising a sensor (46) configured to detect positions of the yarn processing apparatuses (3),
the controller (102) causing the sensor (46) to detect the positions of the yarn processing apparatuses (3) and storing information of the positions of the yarn processing apparatuses (3) in the storage unit (123) based on a detection result of the sensor (46).

4. The automatic yarn threading device (4) according to claim 3, wherein, the sensor (46) is attached to the yarn threading arm (32).

5. The automatic yarn threading device (4) according to claim 3 or 4, wherein, when one of the yarn processing apparatuses (3) is replaced, the controller (102) causes the sensor (46) to detect the position of the one of the yarn processing apparatuses (3), and updates the information of the position of the one of the yarn processing apparatuses (3) stored in the storage unit (123), based on a detection result of the sensor (46).

6. The automatic yarn threading device (4) according to any one of claims 3 to 5, wherein, when one of the yarn processing apparatuses (3) is maintained, the controller (102) causes the sensor (46) to detect the position of the one of the yarn processing apparatuses (3), and updates the information of the position of the one of the yarn processing apparatuses (3) stored in the storage unit (123), based on a detection result of the sensor (46).

7. The automatic yarn threading device (4) according to any one of claims 1 to 6, wherein,
each of the yarn processing apparatuses (3) is a spun yarn take-up apparatus including a take-up unit (3) configured to take up spun yarns (Y) and a winding unit (14) configured to wind the taken-up yarns (Y), and
as the information of the position of each of the yarn processing apparatus (3), the storage unit (123) stores information of a position of the take-up unit (3) and information of a position of the winding unit (14).

8. The automatic yarn threading device (4) according to claim 7, wherein,
the take-up unit (3) includes a godet roller (12, 13), and
the information of the position of the take-up unit (3) includes information of a position of a part of the take-up unit (3) in the vicinity of the godet roller (12, 13) .

9. The automatic yarn threading device (4) according to claim 8, wherein, the information of the position of to take-up unit (3) includes information of a position of a leading end surface of the godet roller (12, 13) in an axial direction of the godet roller (12, 13).

10. The automatic yarn threading device (4) according to claim 8 or 9, wherein,
the take-up unit (3) includes an alignment guide (19) which is provided upstream of the godet roller (12, 13) in a yarn path and arranges the yarns (Y) to be lined up in the axial direction of the godet roller (12, 13), and
the information of the position of the take-up unit (3) includes information of a position of a part of the take-up unit (3) in the vicinity of the alignment guide (19) .

11. The automatic yarn threading device (4) according to any one of claims 7 to 10, wherein,
the winding unit (14) includes distribution guides (21) which are lined up in a direction orthogonal to the axial direction of the godet roller (12, 13), and
the information of the position of the winding unit (14) includes information of a position of a part of the winding unit (14) in the vicinity of the distribution guides (21).

12. The automatic yarn threading device (4) according to any one of claims 1 to 11, wherein,
each of the yarn processing apparatuses (3) includes a plane, and
the information of the positions stored in the storage unit (123) includes information of a position of the plane in a direction orthogonal to the plane.

13. The automatic yarn threading device (4) according to any one of claims 1 to 12, wherein,
each of the yarn processing apparatuses (3) is positioned by a positioning member and installed, and
the storage unit (123) stores at least one set of information of the position of each of the yarn processing apparatuses (3) for each of three directions which are orthogonal to one another.

14. A yarn processing system comprising:
a yarn processing apparatus (3); and
an automatic yarn threading device (4) according to claim 1.

15. A yarn threading method of performing yarn threading onto a yarn processing apparatus (3) by using an automatic yarn threading device (4),
the automatic yarn threading device (4) including:
a yarn threading arm (32); and
a storage unit (123),
the method comprising the steps of: storing, in the storage unit (123), arm movement information regarding how the yarn threading arm (32) is moved when the yarn threading arm (32) is caused to perform the yarn threading onto the yarn processing apparatus (3) at a predetermined reference position; and
**characterized by** storing, in the storage unit (123), information of an actual position of the yarn processing apparatus (3); and
when the yarn threading arm (32) is caused to perform the yarn threading onto the yarn processing apparatus (3), moving the yarn threading arm (32) based on the arm movement information which is corrected based on a difference between the actual position of the yarn processing apparatus (3) and the reference position, and
performing the yarn threading onto plural yarn processing apparatuses (3) each of which is identical with the yarn threading apparatus by using the automatic yarn threading device (4), further comprising the steps of:
storing, in the storage unit (123), the arm movement information regarding how the yarn threading arm (32) is moved when the yarn threading arm (32) is caused to perform the yarn threading onto a first yarn processing apparatus (3A) among the yarn processing apparatuses (3);
storing, in the storage unit (123), information of an actual position of each of the yarn processing apparatuses (3); and
when the yarn threading arm (32) is caused to perform the yarn threading onto a second yarn processing apparatus (3) which is different from the first yarn processing apparatus (3A) among the yarn processing apparatuses (3), moving the yarn threading arm (32) based on the arm movement information which is corrected based on a difference between the position of the first yarn processing apparatus (3A) and the position of the second yarn processing apparatus (3).

16. The yarn threading method according to claim 15, wherein,
the automatic yarn threading device (4) further includes a sensor (46) configured to detect positions of the yarn processing apparatuses (3), the method further comprising the steps of:
causing the sensor (46) to detect the positions of the yarn processing apparatuses (3); and
causing the storage unit (123) to store information of the actual positions of the yarn processing apparatuses (3) based on a detection result of the sensor (46).

17. The yarn threading method according to any one of claims 15 to 16, further comprising the step of, when one of the yarn processing apparatuses (3) is replaced, updating the information of the position of the one of the yarn processing apparatuses (3) stored in the storage unit (123) .

18. The yarn threading method according to any one of claims 15 to 16, further comprising the step of, when one of the yarn processing apparatuses (3) is maintained, updating the information of the position of the one of the yarn processing apparatuses (3) stored in the storage unit (123) .

## Patentansprüche

1. Automatische Garneinfädelvorrichtung (4), die konfiguriert ist, Garneinfädelung an einer Garnverarbeitungseinrichtung (3) durchzuführen, umfassend:
einen Garneinfädelarm (32);
eine Speichereinheit (123), die konfiguriert ist, Armbewegungsinformationen zu speichern, die sich darauf beziehen, wie der Garneinfädelarm (32) bewegt wird, wenn der Garneinfädelarm (32) veranlasst wird, die Garneinfädelung an der Garnverarbeitungseinrichtung (3) an einer vorbestimmten Referenzposition durchzuführen; und
eine Steuerung (102),
**dadurch gekennzeichnet, dass**
die Speichereinheit (123) weiter konfiguriert ist, Informationen einer tatsächlichen Position der Garnverarbeitungseinrichtung (3) zu speichern, und
wenn der Garneinfädelarm (32) veranlasst wird, die Garneinfädelung an der Garnverarbeitungseinrichtung (3) durchzuführen, die Steuerung (102) den Garneinfädelarm (32) basierend auf den Armbewegungsinformationen bewegt, die basierend auf einer Differenz zwischen der tatsächlichen Position der Garnverarbeitungseinrichtung (3) und der Referenzposition korrigiert werden,
wobei die automatische Garneinfädelvorrichtung (4) weiter konfiguriert ist, die Garneinfädelung an mehreren Garnverarbeitungseinrichtungen (3) durchzuführen, von welchen jede mit der Garnverarbeitungseinrichtung (3) identisch ist, wobei
die Speichereinheit (123) konfiguriert ist, die Armbewegungsinformationen, die sich darauf beziehen, wie der Garneinfädelarm (32) bewegt wird, wenn der Garneinfädelarm (32) veranlasst wird, die Garneinfädelung an einer ersten Garnverarbeitungseinrichtung (3A) unter den Garnverarbeitungseinrichtungen (3) durchzuführen, und Informationen einer tatsächlichen Position jeder der Garnverarbeitungseinrichtungen (3) zu speichern, und
wenn der Garneinfädelarm (32) veranlasst wird, die Garneinfädelung an einer zweiten Garnverarbeitungseinrichtung (3) durchzuführen, die sich von der ersten Garnverarbeitungseinrichtung (3A) unter den Garnverarbeitungseinrichtungen (3) unterscheidet, die Steuerung (102) den Garneinfädelarm (32) basierend auf den Armbewegungsinformationen bewegt, die basierend auf einer Differenz zwischen der Position der ersten Garnverarbeitungseinrichtung (3A) und der Position der zweiten Garnverarbeitungseinrichtung (3) korrigiert werden.

2. Automatische Garneinfädelvorrichtung (4) nach Anspruch 1, wobei
die Garnverarbeitungseinrichtungen (3) in einer vorbestimmten Anordnungsrichtung aufgereiht sind,
ein Hauptkörper (31), der in der Anordnungsrichtung bewegbar ist, bereitgestellt ist, wobei der Garneinfädelarm (32) an dem Hauptkörper (31) befestigt ist,
die Steuerung (102) den Hauptkörper (31) selektiv zu einer von Garneinfädelpositionen bewegt, die den jeweiligen Garnverarbeitungseinrichtungen (3) entsprechen, und
als Informationen der Position jeder der Garnverarbeitungseinrichtungen (3) die Speichereinheit (123) Informationen der Position jeder der Garnverarbeitungseinrichtungen (3) unter Bezugnahme auf eine entsprechende der Garneinfädelpositionen speichert.

3. Automatische Garneinfädelvorrichtung (4) nach einem der Ansprüche 1 bis 2, weiter umfassend einen Sensor (46), der konfiguriert ist, Positionen der Garnverarbeitungseinrichtungen (3) zu erfassen,
wobei die Steuerung (102) den Sensor (46) veranlasst, die Positionen der Garnverarbeitungseinrichtungen (3) zu erfassen und Informationen über die Positionen der Garnverarbeitungseinrichtungen (3) in der Speichereinheit (123) basierend auf einem Erfassungsergebnis des Sensors (46) zu speichern.

4. Automatische Garneinfädelvorrichtung (4) nach Anspruch 3, wobei der Sensor (46) am Garneinfädelarm (32) befestigt ist.

5. Automatische Garneinfädelvorrichtung (4) nach Anspruch 3 oder 4, wobei, wenn eine der Garnverarbeitungseinrichtungen (3) ersetzt wird, die Steuerung (102) den Sensor (46) veranlasst, die Position der einen der Garnverarbeitungseinrichtungen (3) zu erfassen, und die Informationen der Position der einen der Garnverarbeitungseinrichtungen (3), die in der Speichereinheit (123) gespeichert sind, basierend auf einem Erfassungsergebnis des Sensors (46) aktualisiert.

6. Automatische Garneinfädelvorrichtung (4) nach einem der Ansprüche 3 bis 5, wobei, wenn eine der Garnverarbeitungseinrichtungen (3) gewartet wird, die Steuerung (102) den Sensor (46) veranlasst, die Position der einen der Garnverarbeitungseinrichtungen (3) zu erfassen, und die Informationen der Position der einen der Garnverarbeitungseinrichtungen (3), die in der Speichereinheit (123) gespeichert sind, basierend auf einem Erfassungsergebnis des Sensors (46) aktualisiert.

7. Automatische Garneinfädelvorrichtung (4) nach einem der Ansprüche 1 bis 6, wobei
jede der Garnverarbeitungseinrichtungen (3) eine Spinngarnaufnahmeeinrichtung ist, die eine Aufnahmeeinheit (3), die konfiguriert ist, Spinngarne (Y) aufzunehmen, und eine Wickeleinheit (14), die konfiguriert ist, die aufgenommenen Garne (Y) zu wickeln, beinhaltet, und
als die Informationen der Position jeder der Garnverarbeitungseinrichtung (3) die Speichereinheit (123) Informationen einer Position der Aufnahmeeinheit (3) und Informationen einer Position der Wickeleinheit (14) speichert.

8. Automatische Garneinfädelvorrichtung (4) nach Anspruch 7, wobei
die Aufnahmeeinheit (3) eine Godetwalze (12, 13) beinhaltet, und
die Informationen der Position der Aufnahmeeinheit (3) Informationen einer Position eines Teils der Aufnahmeeinheit (3) in der Nähe der Godetwalze (12, 13) beinhalten.

9. Automatische Garneinfädelvorrichtung (4) nach Anspruch 8, wobei die Informationen der Position der Aufnahmeeinheit (3) Informationen einer Position einer führenden Endoberfläche der Godetwalze (12, 13) in einer Axialrichtung der Godetwalze (12, 13) beinhalten.

10. Automatische Garneinfädelvorrichtung (4) nach Anspruch 8 oder 9, wobei
die Aufnahmeeinheit (3) eine Ausrichtungsführung (19) beinhaltet, die stromaufwärts der Godetwalze (12, 13) in einem Garnpfad bereitgestellt ist und die Garne (Y) anordnet, um in der Axialrichtung der Godetwalze (12, 13) aufgereiht zu sein, und
die Informationen der Position der Aufnahmeeinheit (3) Informationen einer Position eines Teils der Aufnahmeeinheit (3) in der Nähe der Ausrichtungsführung (19) beinhalten.

11. Automatische Garneinfädelvorrichtung (4) nach einem der Ansprüche 7 bis 10, wobei
die Wickeleinheit (14) Verteilungsführungen (21) beinhaltet, die in einer Richtung orthogonal zu der Axialrichtung der Godetwalze (12, 13) aufgereiht sind, und
die Informationen der Position der Wickeleinheit (14) Informationen einer Position eines Teils der Wickeleinheit (14) in der Nähe der Verteilungsführungen (21) beinhalten.

12. Automatische Garneinfädelvorrichtung (4) nach einem der Ansprüche 1 bis 11, wobei
jede der Garnverarbeitungseinrichtungen (3) eine Ebene beinhaltet, und
die Informationen der Positionen, die in der Speichereinheit (123) gespeichert sind, Informationen einer Position der Ebene in einer Richtung orthogonal zu der Ebene beinhalten.

13. Automatische Garneinfädelvorrichtung (4) nach einem der Ansprüche 1 bis 12, wobei
jede der Garnverarbeitungseinrichtungen (3) durch ein Positionierelement positioniert und installiert wird, und
die Speichereinheit (123) mindestens einen Satz von Informationen der Position jeder der Garnverarbeitungseinrichtungen (3) für jede von drei Richtungen speichert, die orthogonal zueinander sind.

14. Garnverarbeitungssystem, umfassend:
eine Garnverarbeitungseinrichtung (3); und
eine automatische Garneinfädelvorrichtung (4) nach Anspruch 1.

15. Garneinfädelverfahren zum Durchführen einer Garneinfädelung auf einer Garnverarbeitungseinrichtung (3) unter Verwendung einer automatischen Garneinfädelvorrichtung (4),
wobei die automatische Garneinfädelvorrichtung (4) beinhaltet:
einen Garneinfädelarm (32); und
eine Speichereinheit (123),
wobei das Verfahren die Schritte umfasst zum: Speichern, in der Speichereinheit (123) von Armbewegungsinformationen, die sich darauf beziehen, wie der Garneinfädelarm (32) bewegt wird, wenn der Garneinfädelarm (32) veranlasst wird, die Garneinfädelung an der Garnverarbeitungseinrichtung (3) an einer vorbestimmten Referenzposition durchzuführen; und
**gekennzeichnet durch** Speichern, in der Speichereinheit (123), von Informationen einer tatsächlichen Position der Garnverarbeitungseinrichtung (3), und
wenn der Garneinfädelarm (32) veranlasst wird, die Garneinfädelung an der Garnverarbeitungseinrichtung (3) durchzuführen, Bewegen des Garneinfädelarms (32) basierend auf den Armbewegungsinformationen, die basierend auf einer Differenz zwischen der tatsächlichen Position der Garnverarbeitungseinrichtung (3) und der Referenzposition korrigiert werden,
Durchführen der Garneinfädelung an mehreren Garnverarbeitungseinrichtungen (3), von welchen jede mit der Garnverarbeitungseinrichtung identisch ist, unter Verwendung der automatischen Garneinfädelvorrichtung (4), weiter umfassend die folgenden Schritte:
Speichern, in der Speichereinheit (123), der Armbewegungsinformationen, die sich darauf beziehen, wie der Garneinfädelarm (32) bewegt wird, wenn der Garneinfädelarm (32) veranlasst wird, die Garneinfädelung an einer ersten Garnverarbeitungseinrichtung (3A) unter den Garnverarbeitungseinrichtungen (3) durchzuführen;
Speichern, in der Speichereinheit (123), von Informationen einer tatsächlichen Position jeder der Garnverarbeitungseinrichtungen (3); und
wenn der Garneinfädelarm (32) veranlasst wird, die Garneinfädelung an einer zweiten Garnverarbeitungseinrichtung (3) durchzuführen, die sich von der ersten Garnverarbeitungseinrichtung (3A) unter den Garnverarbeitungseinrichtungen (3) unterscheidet, Bewegen des Garneinfädelarms (32) basierend auf den Armbewegungsinformationen, die basierend auf einer Differenz zwischen der Position der ersten Garnverarbeitungseinrichtung (3A) und der Position der zweiten Garnverarbeitungseinrichtung (3) korrigiert werden.

16. Garneinfädelverfahren nach Anspruch 15, wobei
die automatische Garneinfädelvorrichtung (4) weiter einen Sensor (46) beinhaltet, der konfiguriert ist, Positionen der Garnverarbeitungseinrichtungen (3) zu erfassen, wobei das Verfahren weiter die folgenden Schritte umfasst:
Veranlassen des Sensors (46), die Positionen der Garnverarbeitungseinrichtungen (3) zu erfassen; und
Veranlassen der Speichereinheit (123), Informationen der tatsächlichen Positionen der Garnverarbeitungseinrichtungen (3) basierend auf einem Erfassungsergebnis des Sensors (46) zu speichern.

17. Garneinfädelverfahren nach einem der Ansprüche 15 bis 16, weiter umfassend den Schritt, wenn eine der Garnverarbeitungseinrichtungen (3) ersetzt wird, zum Aktualisieren der Informationen der Position der einen der Garnverarbeitungseinrichtungen (3), die in der Speichereinheit (123) gespeichert sind.

18. Garneinfädelverfahren nach einem der Ansprüche 15 bis 16, weiter umfassend den Schritt, wenn eine der Garnverarbeitungseinrichtungen (3) gewartet wird, zum Aktualisieren der Informationen der Position der einen der Garnverarbeitungseinrichtungen (3), die in der Speichereinheit (123) gespeichert sind.

## Revendications

1. Dispositif d'enfilage de fil automatique (4) configuré pour réaliser un enfilage de fil sur un appareil de traitement de fil (3), comprenant :
un bras d'enfilage de fil (32) ;
une unité de stockage (123) qui est configurée pour stocker des informations de déplacement de bras concernant la façon dont le bras d'enfilage de fil (32) est déplacé lorsque le bras d'enfilage de fil (32) est amené à réaliser l'enfilage de fil sur l'appareil de traitement de fil (3) à une position de référence prédéterminée ; et
un dispositif de commande (102),
**caractérisé en ce que**
l'unité de stockage (123) est en outre configurée pour stocker des informations d'une position réelle de l'appareil de traitement de fil (3), et
lorsque le bras d'enfilage de fil (32) est amené à réaliser l'enfilage de fil sur l'appareil de traitement de fil (3), le dispositif de commande (102) déplace le bras d'enfilage de fil (32) sur la base des informations de déplacement de bras qui sont corrigées sur la base d'une différence entre la position réelle de l'appareil de traitement de fil (3) et la position de référence,
le dispositif d'enfilage de fil automatique (4) étant en outre configuré pour réaliser l'enfilage de fil sur plusieurs appareils de traitement de fil (3) dont chacun est identique à l'appareil de traitement de fil (3), dans lequel,
l'unité de stockage (123) est configurée pour stocker les informations de déplacement de bras concernant la façon dont le bras d'enfilage de fil (32) est déplacé lorsque le bras d'enfilage de fil (32) est amené à réaliser l'enfilage de fil sur un premier appareil de traitement de fil (3A) parmi les appareils de traitement de fil (3) et des informations d'une position réelle de chacun des appareils de traitement de fil (3), et
lorsque le bras d'enfilage de fil (32) est amené à réaliser l'enfilage de fil sur un second appareil de traitement de fil (3) qui est différent du premier appareil de traitement de fil (3A) parmi les appareils de traitement de fil (3), le dispositif de commande (102) déplace le bras d'enfilage de fil (32) sur la base des informations de déplacement de bras qui sont corrigées sur la base d'une différence entre la position du premier appareil de traitement de fil (3A) et la position du second appareil de traitement de fil (3).

2. Dispositif d'enfilage de fil automatique (4) selon la revendication 1, dans lequel,
les appareils de traitement de fil (3) sont disposés en ligne dans une direction d'agencement prédéterminée,
un corps principal (31) déplaçable dans la direction d'agencement est prévu, le bras d'enfilage de fil (32) étant attaché au corps principal (31),
le dispositif de commande (102) déplace sélectivement le corps principal (31) à l'une de positions d'enfilage de fil correspondant aux appareils de traitement de fil (3) respectifs, et
en tant qu'informations de la position de chacun des appareils de traitement de fil (3), l'unité de stockage (123) stocke des informations de la position de chacun des appareils de traitement de fil (3) en référence à l'une correspondante des positions d'enfilage de fil.

3. Dispositif d'enfilage de fil automatique (4) selon l'une quelconque des revendications 1 à 2, comprenant en outre un capteur (46) configuré pour détecter des positions des appareils de traitement de fil (3),
le dispositif de commande (102) amenant le capteur (46) à détecter les positions des appareils de traitement de fil (3) et stockant des informations des positions des appareils de traitement de fil (3) dans l'unité de stockage (123) sur la base d'un résultat de détection du capteur (46).

4. Dispositif d'enfilage de fil automatique (4) selon la revendication 3, dans lequel, le capteur (46) est attaché au bras d'enfilage de fil (32).

5. Dispositif d'enfilage de fil automatique (4) selon la revendication 3 ou 4, dans lequel, lorsque l'un des appareils de traitement de fil (3) est remplacé, le dispositif de commande (102) amène le capteur (46) à détecter la position de cet appareil des appareils de traitement de fil (3), et actualise les informations de la position de cet appareil des appareils de traitement de fil (3) stockées dans l'unité de stockage (123), sur la base d'un résultat de détection du capteur (46).

6. Dispositif d'enfilage de fil automatique (4) selon l'une quelconque des revendications 3 à 5, dans lequel, lorsque l'un des appareils de traitement de fil (3) est conservé, le dispositif de commande (102) amène le capteur (46) à détecter la position de cet appareil des appareils de traitement de fil (3), et actualise les informations de la position de cet appareil des appareils de traitement de fil (3) stockées dans l'unité de stockage (123), sur la base d'un résultat de détection du capteur (46).

7. Dispositif d'enfilage de fil automatique (4) selon l'une quelconque des revendications 1 à 6, dans lequel,
chacun des appareils de traitement de fil (3) est un appareil de bobinage de filé incluant une unité de bobinage (3) configurée pour bobiner des filés (Y) et une unité d'enroulement (14) configurée pour enrouler les filés (Y), et
en tant qu'informations de la position de chacun des appareils de traitement de fil (3), l'unité de stockage (123) stocke des informations d'une position de l'unité de bobinage (3) et des informations d'une position de l'unité d'enroulement (14).

8. Dispositif d'enfilage de fil automatique (4) selon la revendication 7, dans lequel,
l'unité de bobinage (3) inclut un godet de filage (12, 13), et
les informations de la position de l'unité de bobinage (3) incluent des informations d'une position d'une partie de l'unité de bobinage (3) au voisinage du godet de filage (12, 13).

9. Dispositif d'enfilage de fil automatique (4) selon la revendication 8, dans lequel, les informations de la position de l'unité de bobinage (3) incluent des informations d'une position d'une surface d'extrémité avant du godet de filage (12, 13) dans une direction axiale du godet de filage (12, 13).

10. Dispositif d'enfilage de fil automatique (4) selon la revendication 8 ou 9, dans lequel,
l'unité de bobinage (3) inclut un guide d'alignement (19) qui est prévu en amont du godet de filage (12, 13) sur un trajet de fil et agence les fils (Y) à disposer en ligne dans la direction axiale du godet de filage (12, 13), et
les informations de la position de l'unité de bobinage (3) incluent des informations d'une position d'une partie de l'unité de bobinage (3) au voisinage du guide d'alignement (19).

11. Dispositif d'enfilage de fil automatique (4) selon l'une quelconque des revendications 7 à 10, dans lequel,
l'unité d'enroulement (14) inclut des guides de distribution (21) qui sont disposés en ligne dans une direction orthogonale à la direction axiale du godet de filage (12, 13), et
les informations de la position de l'unité d'enroulement (14) incluent des informations d'une position d'une partie de l'unité d'enroulement (14) au voisinage des guides de distribution (21).

12. Dispositif d'enfilage de fil automatique (4) selon l'une quelconque des revendications 1 à 11, dans lequel,
chacun des appareils de traitement de fil (3) inclut un plan, et
les informations des positions stockées dans l'unité de stockage (123) incluent des informations d'une position du plan dans une direction orthogonale au plan.

13. Dispositif d'enfilage de fil automatique (4) selon l'une quelconque des revendications 1 à 12, dans lequel,
chacun des appareils de traitement de fil (3) est positionné par un organe de positionnement et installé, et
l'unité de stockage (123) stocke au moins un ensemble d'informations de la position de chacun des appareils de traitement de fil (3) pour chacune de trois directions qui sont orthogonales les unes aux autres.

14. Système de traitement de fil comprenant :
un appareil de traitement de fil (3) ; et
un dispositif d'enfilage de fil automatique (4) selon la revendication 1.

15. Procédé d'enfilage de fil consistant à réaliser un enfilage de fil sur un appareil de traitement de fil (3) en utilisant un dispositif d'enfilage de fil automatique (4),
le dispositif d'enfilage de fil automatique (4) incluant :
un bras d'enfilage de fil (32) ; et
une unité de stockage (123),
le procédé comprenant les étapes consistant à : stocker, dans l'unité de stockage (123), des informations de déplacement de bras concernant la façon dont le bras d'enfilage de fil (32) est déplacé lorsque le bras d'enfilage de fil (32) est amené à réaliser l'enfilage de fil sur l'appareil de traitement de fil (3) à une position de référence prédéterminée ; et
**caractérisé par** le stockage, dans l'unité de stockage (123), d'informations d'une position réelle de l'appareil de traitement de fil (3) ; et
lorsque le bras d'enfilage de fil (32) est amené à réaliser l'enfilage de fil sur l'appareil de traitement de fil (3), le déplacement du bras d'enfilage de fil (32) sur la base des informations de déplacement de bras qui sont corrigées sur la base d'une différence entre la position réelle de l'appareil de traitement de fil (3) et la position de référence,
la réalisation de l'enfilage de fil sur plusieurs appareils de traitement de fil (3) dont chacun est identique à l'appareil d'enfilage de fil en utilisant le dispositif d'enfilage de fil automatique (4), comprenant en outre les étapes consistant à :
stocker, dans l'unité de stockage (123), les informations de déplacement de bras concernant la façon dont le bras d'enfilage de fil (32) est déplacé lorsque le bras d'enfilage de fil (32) est amené à réaliser l'enfilage de fil sur un premier appareil de traitement de fil (3A) parmi les appareils de traitement de fil (3) ;
stocker, dans l'unité de stockage (123), des informations d'une position réelle de chacun des appareils de traitement de fil (3) ; et
lorsque le bras d'enfilage de fil (32) est amené à réaliser l'enfilage de fil sur un second appareil de traitement de fil (3) qui est différent du premier appareil de traitement de fil (3A) parmi les appareils de traitement de fil (3), déplacer le bras d'enfilage de fil (32) sur la base des informations de déplacement de bras qui sont corrigées sur la base d'une différence entre la position du premier appareil de traitement de fil (3A) et la position du second appareil de traitement de fil (3).

16. Procédé d'enfilage de fil selon la revendication 15, dans lequel,
le dispositif d'enfilage de fil automatique (4) inclut en outre un capteur (46) configuré pour détecter des positions des appareils de traitement de fil (3), le procédé comprenant en outre les étapes consistant à :
amener le capteur (46) à détecter les positions des appareils de traitement de fil (3) ; et
amener l'unité de stockage (123) à stocker des informations des positions réelles des appareils de traitement de fil (3) sur la base d'un résultat de détection du capteur (46).

17. Procédé d'enfilage de fil selon l'une quelconque des revendications 15 à 16, comprenant en outre l'étape consistant à, lorsque l'un des appareils de traitement de fil (3) est remplacé, actualiser les informations de la position de cet appareil des appareils de traitement de fil (3) stockées dans l'unité de stockage (123).

18. Procédé d'enfilage de fil selon l'une quelconque des revendications 15 à 16, comprenant en outre l'étape consistant à, lorsque l'un des appareils de traitement de fil (3) est conservé, actualiser les informations de la position de cet appareil des appareils de traitement de fil (3) stockées dans l'unité de stockage (123).
